(19)

Europäisches
Patentamt

European
Patent Office

Office européen
des brevets

(11) **EP 4 471 623 A1**

(12) **EUROPEAN PATENT APPLICATION**
published in accordance with Art. 153(4) EPC

(43) Date of publication:
**04.12.2024 Bulletin 2024/49**

(21) Application number: **23773738.2**

(22) Date of filing: **17.03.2023**

(51) International Patent Classification (IPC):
***G06F 16/9535*** (2019.01)

(52) Cooperative Patent Classification (CPC):
**G06F 16/9535; G06F 16/9538; G06F 18/214;
G06F 18/22; G06F 18/24; G06F 18/25**

(86) International application number:
**PCT/CN2023/082201**

(87) International publication number:
**WO 2023/179490 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.03.2022  CN 202210307768**

(71) Applicant: **Huawei Technologies Co., Ltd.
Shenzhen, Guangdong 518129 (CN)**

(72) Inventors:
• **GAO, Yanjie
  Shenzhen, Guangdong 518129 (CN)**
• **LI, Ze
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **APPLICATION RECOMMENDATION METHOD AND AN ELECTRONIC DEVICE**

(57)      This application provides an application recommendation method and an electronic device. The method includes: displaying, on a first interface, description information and an application recommendation list that are of a first application, where the description information of the first application includes an image and a text that are related to the first application, and the application recommendation list of the first application includes a second application related to the first application; receiving a first operation for the second application in the application recommendation list of the first application; and displaying a first image on the first interface in response to the first operation, where the first image is an image that is related to the second application and that is in description information of the second application, the description information of the second application includes an image and a text that are related to the second application, and the first image is determined based on the description information of the second application and the description information of the first application. In this way, the image shows a difference between the second application and the first application, so that costs of an image display material are reduced.

FIG. 10

EP 4 471 623 A1

## Description

This application claims priority to Chinese Patent Application No. 202210307768.8, filed with the China National Intellectual Property Administration on March 25, 2022 and entitled "APPLICATION RECOMMENDATION METHOD AND ELECTRONIC DEVICE", which is incorporated herein by reference in its entirety.

## TECHNICAL FIELD

This application relates to the field of electronic technologies, and in particular, to an application recommendation method and an electronic device.

## BACKGROUND

With continuous development of Internet technologies and improvement of performance of electronic devices, various types of applications (applications, APPs) emerge in the market. Variety and complex functions of applications provide users with convenience in life and learning, but also bring users some difficulties in selection.

Currently, in a conventional technology, an electronic device usually recommends, on a details page of an application based on feature information of the application and behavior information of a user (such as evaluation information and/or a download count), a plurality of applications (for example, applications of a same type, with a similar function, or of a related service) related to the application, to help the user quickly find applications that the user is interested in.

However, in the conventional technology, features of recommended applications cannot be intuitively reflected, and the user needs to view the applications one by one to find an application that the user is interested in. This wastes a large amount of time of the user, and reduces the user's desire to explore the application that the user is interested in, resulting in a poor application recommendation effect.

## SUMMARY

This application provides an application recommendation method and an electronic device, to resolve a problem in a conventional technology that an application recommendation effect is poor because a feature of a recommended application cannot be intuitively reflected, a user needs to spend a large amount of time to find an application that the user is interested in, and a desire to explore the application that the user is interested in is reduced. Application recommendation is implemented in an image-text combination/image manner, and user experience of application recommendation is improved.

According to a first aspect, this application provides an application recommendation method, applied to an electronic device.

The method includes:

displaying, on a first interface, description information and an application recommendation list that are of a first application, where the description information of the first application includes an image and a text that are related to the first application, and the application recommendation list of the first application includes a second application related to the first application;

receiving a first operation for the second application in the application recommendation list of the first application; and

displaying a first image on the first interface in response to the first operation, where the first image is an image that is related to the second application and that is in description information of the second application, the description information of the second application includes an image and a text that are related to the second application, and the first image is determined based on the description information of the second application and the description information of the first application.

According to the application recommendation method provided in the first aspect, when recommending the second application related to the first application, the electronic device may display a difference between the second application and the first application in an image manner, to facilitate accurate differentiation and quick selection by the user. This improves user experience of application recommendation, and increases a conversion rate of application recommendation. In addition, a display material of the image does not need to be obtained through manual configuration, and extra costs of application recommendation are avoided.

In addition, the second application related to the first application can be further accurately recommended. This improves correlation of application recommendation, reduces a probability of recommending an application unrelated to the first application, helps attract the user to view or download the second application, increases a click-through rate and a download count of the recommended second application, and brings better recommendation experience to the user.

In a possible design, that the first image is determined based on the description information of the second application and the description information of the first application includes: The first image is an image that is related to the second application and that has a greatest difference from the image related to the first application.

In a possible design, the method includes:
further displaying a first text on the first interface in response to the first operation, where the first text indicates a feature of the second application.

Therefore, when the electronic device recommends the second application related to the first application, an image-text combination manner is used, so that not only a difference between the second application and the first application is displayed, which facilitates accurate differentiation and quick selection by the user, but also the feature and an advantage of the second application are highlighted, so that the user can quickly have a full understanding of the second application, interest of the user in downloading the second application is increased. In addition, a display material of the image does not need to be obtained through manual configuration, and extra costs of application recommendation are avoided.

In a possible design, the first text is placed in the first image.

Therefore, the difference between the second application and the first application and the feature and the advantage of the second application are more reasonably displayed in the image-text combination manner.

In a possible design, an overlay location, a font color, and a font size of the first text are determined based on the first image.

Therefore, parameters such as the overlay location, the font color, and the font size of the first text in the first image are adaptively adjusted, so that a better display effect of the first image and the first text is ensured.

In a possible design, the first text includes at least one of the following texts:
a text provided by a developer of the second application, a text related to the second application, or a text in the image related to the second application.

Therefore, a plurality of sources are provided for the first text, and specific implementations of the first text are enriched.

In a possible design, the method further includes:

displaying, on a second interface, description information and an application recommendation list that are of a third application, where the description information of the third application includes an image and a text that are related to the third application, and the application recommendation list of the third application includes the second application;
receiving a second operation for the second application in the application recommendation list of the third application; and
displaying a second image on the second interface in response to the second operation, where the second image is an image that is related to the second application and that is in the description information of the second application, the second image is determined based on the description information of the second application and the description information of the third application, and the second image is different from the first image.

Therefore, a same application may be recommended in application recommendation lists of different applications, and different images of the application may be further displayed on details pages of the different applications.

In a possible design, the third application and the first application are of different types.

In a possible design, the method includes:

further displaying a trigger control on the first interface in response to the first operation, where the trigger control is configured to trigger installation or update of the second application;
receiving a third operation for the trigger control; and
installing or updating the second application in the electronic device in response to the third operation.

Therefore, on the basis of displaying the image, or the image and the text, the trigger control for installing or updating the second application may be further provided for the user, so that the user can quickly install or update the second application in the electronic device. In addition, when the second application is installed and does not need to be updated, the trigger control is further configured to trigger display of a details page of the second application.

In a possible design, the trigger control is placed in the first image.

Therefore, the trigger control may be adaptively embedded in the first image, so that a display effect of the first image is improved.

In a possible design, the displaying a first image on the first interface in response to the first operation includes:

sending a first request to a server in response to the first operation;

receiving a first response from the server, where the first response carries the first image; and

displaying the first image in a partial area on the first interface.

Therefore, the electronic device may obtain the first image from the server by interacting with the server. Therefore, when recommending the second application, the electronic device may display the first image that has a greatest difference between the second application and the first application.

In a possible design, the method further includes:

receiving a fourth operation in the first image; and

displaying, on a third interface in response to the fourth operation, the description information and an application recommendation list that are of the second application.

Therefore, a new manner is provided for displaying the details page of the second application.

In a possible design, the method further includes:

receiving a fifth operation for the second application in the application recommendation list of the first application, where the fifth operation is different from the first operation; and

displaying, on a fifth interface in response to the fifth operation, the description information and the application recommendation list that are of the second application.

Therefore, a manner of displaying the details page of the second application is considered.

In a possible design, the first interface is a user interface of an application market, and the first application or the second application is an application provided in the application market.

According to a second aspect, this application provides an electronic device, including a memory and a processor. The memory is configured to store program instructions. The processor is configured to invoke the program instructions in the memory, to enable the electronic device to perform the application recommendation method according to any one of the first aspect or the possible designs of the first aspect.

According to a third aspect, this application provides a chip system, where the chip system is applied to an electronic device including a memory, a display, and a sensor. The chip system includes a processor. When the processor executes computer instructions stored in the memory, the electronic device is enabled to perform the application recommendation method according to any one of the first aspect or the possible designs of the first aspect.

According to a fourth aspect, this application provides a computer-readable storage medium. The computer-readable storage medium stores a computer program. When the computer program is executed by a processor, an electronic device is enabled to perform the application recommendation method according to any one of the first aspect and the possible designs of the first aspect.

According to a fifth aspect, this application provides a computer program product, including executable instructions. The executable instructions are stored in a readable storage medium. At least one processor of an electronic device may read the executable instructions from the readable storage medium, and the at least one processor executes the executable instructions, to enable the electronic device to perform the application recommendation method according to any one of the first aspect and the possible designs of the first aspect.

## BRIEF DESCRIPTION OF DRAWINGS

FIG. 1 is a diagram of a human-machine interaction interface according to an embodiment of this application;

FIG. 2A to FIG. 2E are diagrams of human-machine interaction interfaces according to an embodiment of this application;

FIG. 3A is a diagram of a structure of a communication system according to an embodiment of this application;

FIG. 3B is a block diagram of software structures of an electronic device and a server according to an embodiment of this application;

FIG. 4A to FIG. 4D are a signaling interaction diagram of extracting a feature of an application according to an embodiment of this application;

FIG. 5 is a schematic flowchart of optimizing a text feature vector according to an embodiment of this application;

FIG. 6 is a diagram of determining, by a difference detection module, a differentiated image DF of an application according to an embodiment of this application;

FIG. 7A to FIG. 7C are diagrams of differentiated information of an application according to an embodiment of this application;

FIG. 8 is a signaling interaction diagram of an application recommendation method according to an embodiment of this application;

FIG. 9A to FIG. 9K are diagrams of human-machine interaction interfaces according to an embodiment of this application;

FIG. 10 is a schematic flowchart of an application recommendation method according to an embodiment of this application;

FIG. 11 is a schematic flowchart of an application recommendation method according to an embodiment of this application;

FIG. 12 is a schematic flowchart of an application recommendation method according to an embodiment of this application;

FIG. 13 is a diagram of a structure of an electronic device according to an embodiment of this application; and

FIG. 14 is a block diagram of a software structure of an electronic device according to an embodiment of this application.

## DESCRIPTION OF EMBODIMENTS

In this application, "at least one" refers to one or more, and "a plurality of" refers to two or more. The term "and/or" describes an association relationship between associated objects and may indicate three relationships. For example, A and/or B may indicate the following cases: Only A exists, both A and B exist, and only B exists. A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may represent: a, b, c, a combination of a and b, a combination of a and c, a combination of b and c, or a combination of a, b and c, where each of a, b, and c may be in a singular form or a plural form. In addition, terms "first" and "second" are merely used for a purpose of description, and shall not be understood as an indication or implication of relative importance. Locations or location relationships indicated by terms "center", "vertical", "horizontal", "up", "down", "left", "right", "in front of", "behind", and the like are based on locations or location relationships shown in the accompanying drawings, and are merely intended for ease of describing this application and simplifying descriptions, instead of indicating or implying that a mentioned apparatus or component needs to be provided on a specific location or constructed and operated on a specific location, and therefore shall not be understood as limitations on this application.

This application provides an application recommendation method and an electronic device. When a plurality of applications related to one application are recommended, a difference between a recommended application and the application may be displayed in an image-text combination/image manner. This helps highlight a feature and an advantage of the recommended application, facilitates accurate differentiation and quick selection by a user, improves user experience of application recommendation, and increases a conversion rate of application recommendation. In addition, a display material of the image-text combination/ image does not need to be obtained through manual configuration, and extra costs of application recommendation are avoided.

In addition, a plurality of applications related to one application may be accurately recommended. This improves correlation of application recommendation, reduces a probability of recommending a plurality of applications unrelated to the application, helps attract the user to view or download a recommended application, increases a click-through rate and a download count of the recommended application, and brings better recommendation experience to the user.

The application recommendation method provided in this application may be applied to various scenarios of recommending an application to a user.

For ease of description, in this application, a scenario in which when displaying a details page of any application (which may be referred to as an application 1) in an application market, the electronic device may recommend at least one application (for ease of description, an application 2 is used as an example) related to the application 1 to the user, and may further display differentiated information between the application 2 and the application 1 to the user is used as an example for description.

Specific implementations of the application 1, the details page of the application 1, the application 2, and the differentiated information between the application 2 and the application 1 are not limited in this application. It should be noted that whether the application 1 or the application 2 is installed on the electronic device is not limited in this application.

In some embodiments, the details page of the application 1 may include description information of the application 1.

A specific implementation of the description information of the application 1 is not limited in this application. For example, the description information of the application 1 may include but is not limited to: a name, an icon, a function introduction, a version number, a developer, a development time, a feature description, various descriptions, a function interface, a download count, and evaluation information of the application 1. The description information of the application 1 may be displayed in, a manner such as a text and/or an image.

In some embodiments, the description information of the application 1 may come from text information of the application 1, image information of the application 1, and log information of user behavior data that are provided by the developer of the application 1.

The text information of the application 1 is used to briefly describe a text feature of the application 1, for example, a title text, a name, a description text, and a function description of the application 1. The image information of the application 1 is used to describe an interface feature of the application 1, for example, an image (for example, a picture or a video animation) of the application 1.

In addition, the description information of the application 1 may further include description information that is related to the application 1 and that is obtained from an Internet corpus. A specific implementation of the Internet corpus is not limited in this application.

The log information of the user behavior data is used to describe download behaviors about the application 1 that are generated when requests of different users for viewing the details page of the application 1 are obtained.

In some embodiments, the log information of the user behavior data may include the download count of the application 1.

In addition, the log information of the user behavior data is further used to describe an evaluation behavior of the user on the application 1.

In some other embodiments, the log information of the user behavior data may include: the download count of the application 1, the evaluation information of the application 1, a rating score, and a quantity of raters.

In addition, the details page of the application 1 may further include an application recommendation list of the application 1.

Each application in the application recommendation list of the application 1 is related to the application 1, for example, an application of a same type, with a similar function, or of a related service. A specific implementation of the application in the application recommendation list of the application 1 is not limited in this application.

In some embodiments, the application recommendation list of the application 1 may include the application 2. Correspondingly, description information such as an icon, a name, and an image (for example, a picture or a video animation) of the application 2 is displayed in the application recommendation list of the application 1.

For example, the application 2 and the application 1 may be applications of different versions. In other words, the application 2 and the application 1 are of a same type. Both the application 2 and the application 1 are applications of a chat type. In other words, functions of the application 2 and the application 1 are similar. The application 2 may be an application that needs to be invoked when the application 1 performs a function/service. In other words, the application 2 is related to a service of the application 1.

The differentiated information between the application 2 and the application 1 indicates a difference (namely, a deviation) between the application 1 and the application 2, and can highlight a feature and an advantage of the application 2. The differentiated information between the application 2 and the application 1 may be represented by using an image, or by using a text and an image.

In some embodiments, the differentiated information between the application 2 and the application 1 may include a differentiated image DF of the application 2 and a differentiated text DT of the application 2. Alternatively, the differentiated information between the application 2 and the application 1 may include a differentiated image DF of the application 2.

The differentiated image DF of the application 2 comes from image information of the application 2 provided by a developer of the application 2.

For example, the differentiated image DF of the application 2 may be an image that has a greatest difference between the application 2 and the application 1 and that is selected from the image information of the application 2 based on the description information of the application 1 and the description information of the application 2. The differentiated text DT of the application 2 is used to describe the feature and the advantage of the application 2.

The differentiated text DT of the application 2 may be a text provided by the developer of the application 2, or may be a text determined by a server based on the description information of the application 1 and the description information of the application 2. For the text information of the application 2, refer to the description of the text information of the application 1 mentioned above. Details are not described herein again.

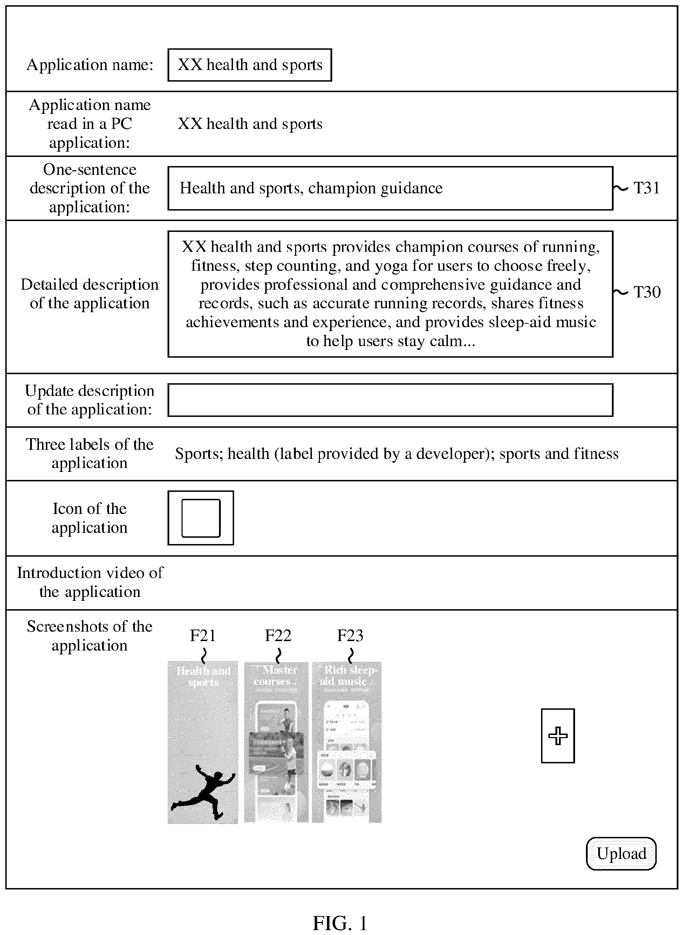

The following describes in detail a specific implementation of the description information of the application 2 with reference to FIG. 1.

FIG. 1 is a diagram of a human-machine interaction interface according to an embodiment of this application.

For ease of description, in FIG. 1, an example in which the application 2 is an XX health and sports application is used for illustration.

As shown in FIG. 1, a developer of the application 2 may transmit description information such as a name of the application 2, an icon of the application 2, a text T31 of the application 2, a detailed introduction T30 of the application 2, an update introduction of the application 2, an image F21 of the application 2, an image F22 of the application 2, and an image F23 of the application 2 to an application market through the interface.

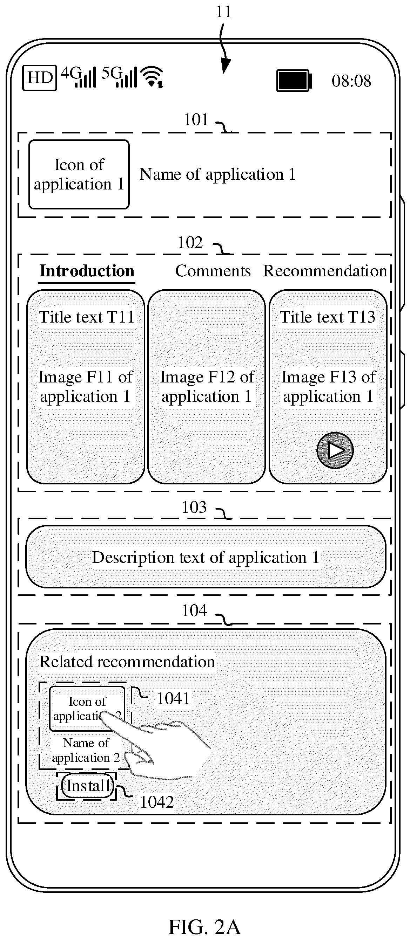

Based on the foregoing descriptions and with reference to FIG. 2A to FIG. 2E, a specific implementation process of the foregoing scenario in which when displaying the details page of the application 1 in the application market, the electronic device may recommend the application 2 to the user, and may further display the differentiated information between the application 2 and the application 1 to the user is described in detail.

FIG. 2A to FIG. 2E are diagrams of human-machine interaction interfaces according to an embodiment of this application.

For ease of description, in FIG. 2A to FIG. 2E, an example in which the electronic device is a mobile phone, and an application market is installed on the mobile phone is used for illustration.

The mobile phone may display a user interface 11 shown in FIG. 2A as an example. The user interface 11 is an interface of the application market, and the user interface 11 is used to display the details page of the application 1.

In FIG. 2A, the user interface 11 may include an area 101, an area 102, an area 103, and an area 104.

The area 101, the area 102, and the area 103 are used to display the description information of the application 1. The area 104 is used to display the application recommendation list of the application 1.

Display parameters such as locations, sizes, shapes, layouts, and colors of the area 101, the area 102, the area 103, and the area 104 are not limited in this application.

In addition, in addition to the area 101, the area 102, the area 103, and the area 104, the user interface 11 may be further used to provide an entry for other functions or services of the application 1, such as installing or updating the application 1, sharing the application 1, and viewing comment information of the application 1.

For example, when the application 1 is not installed on the mobile phone, the user interface 11 may be used to provide an entry for installing the application 1. When the application 1 of a non-latest version is installed on the mobile phone, the user interface 11 may be used to provide an entry for updating the application 1. When the application 1 of a latest version is installed on the mobile phone, the user interface 11 may be used to provide an entry for starting the application 1.

The area 101 is used to display description information such as an icon, a name, and an application description of the application 1.

The area 102 is used to display description information such as a function interface, evaluation information, and a recommendation description of the application 1.

The area 102 may include an image F11, an image F12, and an image F13 of the application 1. Any image mentioned above may be a picture or a video.

In addition, a picture of any image may not include a text, for example, the image F12 of the application 1, or may include a text, for example, a title text T11 in the image F11 of the application 1 and a title text T13 in the image F13 of the application 1. Parameters such as a location, a font size, and a color of any one of the title texts in a corresponding image is not limited in this application.

The area 103 is used to display description information such as a function introduction, a version number, a developer, a development time, another description, and a download count of the application 1.

The area 104 is used to display the application recommendation list of the application 1, for example, the application 2; provide an entry for installing or updating the application 2; provide an entry for starting the application 2; and provide an entry for displaying a details page of the application 2 and differentiated information of the application 2.

The area 104 may include an area 1041 and a control 1042. Display parameters such as locations, sizes, shapes, layouts, and colors of the area 1041 and the control 1042 are not limited in this application.

The area 1041 is used to display description information such as an icon and a name of the application 2, and provide an entry for displaying the details page and the differentiated information of the application 2.

The control 1042 is configured to provide an entry for installing or updating the application 2 on the mobile phone.

It should be noted that, when the application 2 is not installed on the mobile phone, the control 1042 may be configured to provide an entry for installing the application 2. When the application 2 of a non-latest version is installed on the mobile phone, the control 1042 may be configured to provide an entry for updating the application 2. When the application 2 of a latest version is installed on the mobile phone, the control 1042 may be configured to provide an entry for starting the application 2.

Due to a limitation of factors such as a screen size and an interface layout of the mobile phone, the mobile phone may display all or a part of images of the application 1 on the user interface 11 shown in FIG. 2A.

In some embodiments, the mobile phone may display a part of images of the application 1, for example, the image F11, the image F12, and a part of the image F13 of the application 1, in the area 102 shown in FIG. 2A. When detecting an operation (for example, a slide operation performed in the area 102) that is performed by the user in the area 102 and that indicates to view remaining images of the application 1, the mobile phone may display the remaining images of the application 1, for example, the image F13 of the application 1, in the area 102.

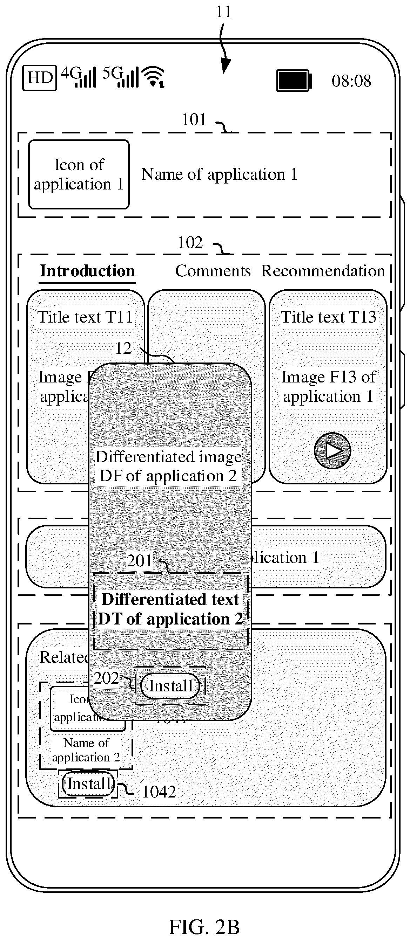

After detecting an operation 21 (for example, a touch and hold operation performed in the area 1041) that is performed by the user in the area 1041 shown in FIG. 2A and that indicates to view the differentiated information of the application 2, the mobile phone may display, on the user interface 11, a window 12 shown in any one of FIG. 2B to FIG. 2E as an example. The window 12 is used to display the differentiated information between the application 2 and the application 1.

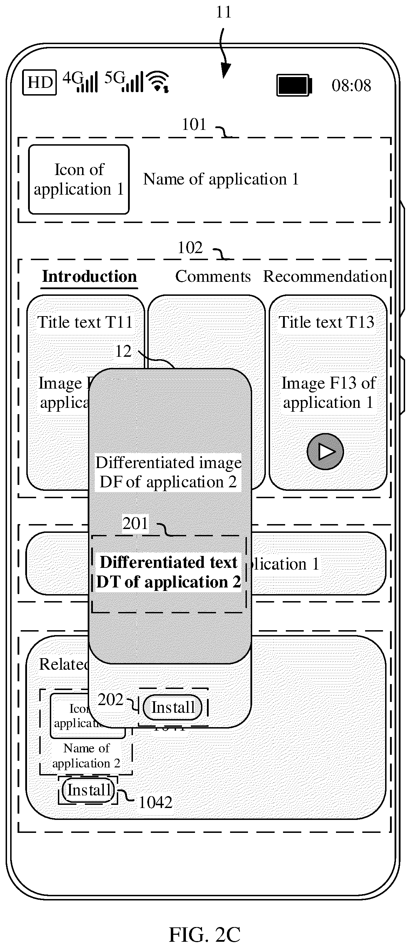

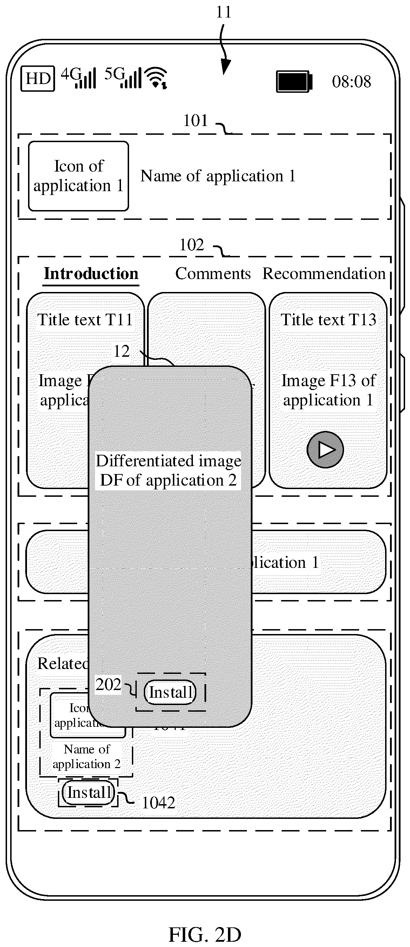

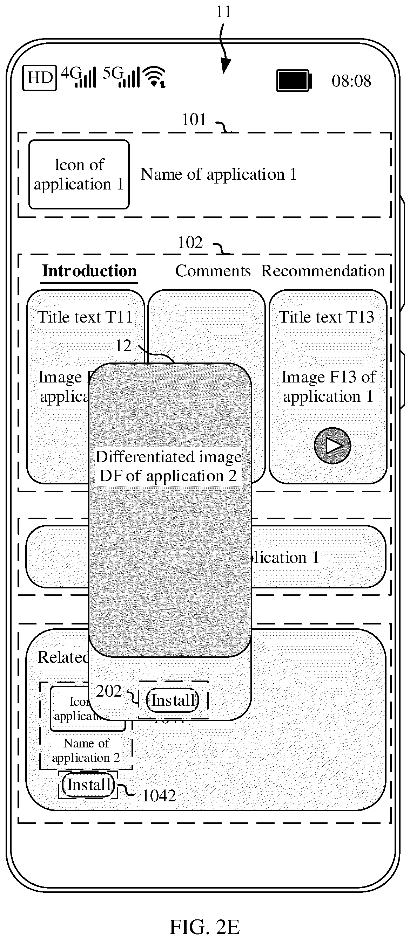

In FIG. 2B and FIG. 2C, the window 12 may include a differentiated image DF of the application 2 and a differentiated text DT of the application 2. In FIG. 2D and FIG. 2E, the window 12 may include the differentiated image DF of the application 2.

In FIG. 2B, the differentiated image DF of the application 2 may be filled in an entire area of the window 12, and the differentiated text DT of the application 2 may be displayed in an area 201 of the window 12, so that the differentiated text DT of the application 2 is placed in the differentiated image DF of the application 2.

In FIG. 2C, the differentiated image DF of the application 2 may be filled in a partial area of the window 12, and the differentiated text DT of the application 2 may be displayed in the area 201 of the window 12, so that the differentiated text DT of the application 2 is placed in the differentiated image DF of the application 2.

In FIG. 2D, the differentiated image DF of the application 2 may be filled in an entire area of the window 12.

In FIG. 2E, the differentiated image DF of the application 2 may be filled in a partial area of the window 12.

After detecting an operation 22 (for example, a tap operation performed in the area 1041 or the window 12) that is performed by the user in the area 104 or the window 12 and that indicates to view the details page of the application 2, the mobile phone may display the details page of the application 2.

In addition, the window 12 is further used to provide an entry for installing or updating the application 2. For example, in FIG. 2B to FIG. 2E, the window 12 may further include a control 202, and the control 202 is configured to provide an entry for installing or updating the application 2 in the mobile phone.

Display parameters such as a location, a size, a color, and a shape of the control 202 in the window 12 is not limited in this application.

For example, in FIG. 2B and FIG. 2D, the control 202 is placed in the differentiated image DF. In FIG. 2C and FIG. 2E, the control 202 is placed in an area in the window 12 other than the area for displaying the differentiated image DF.

After detecting an operation 23 (for example, a tap operation performed on the control 1042 or the control 202) that is performed by the user in the area 104 or the window 12 and that indicates to install or update the application 2, the mobile phone may download an installation package/patch package of the application 2, and install or update the application 2 in the mobile phone.

In conclusion, when displaying the details page of the application 1, the electronic device may recommend the application 2 to the user, and may further display a difference between the application 2 and the application 1 to the user in an image-text combination/image manner, so that the user can quickly have a full understanding of the feature and the advantage of the application 2, and the user's interest in downloading the application 2 is increased.

The following describes in detail a specific implementation of the application recommendation method in this application with reference to the accompanying drawings.

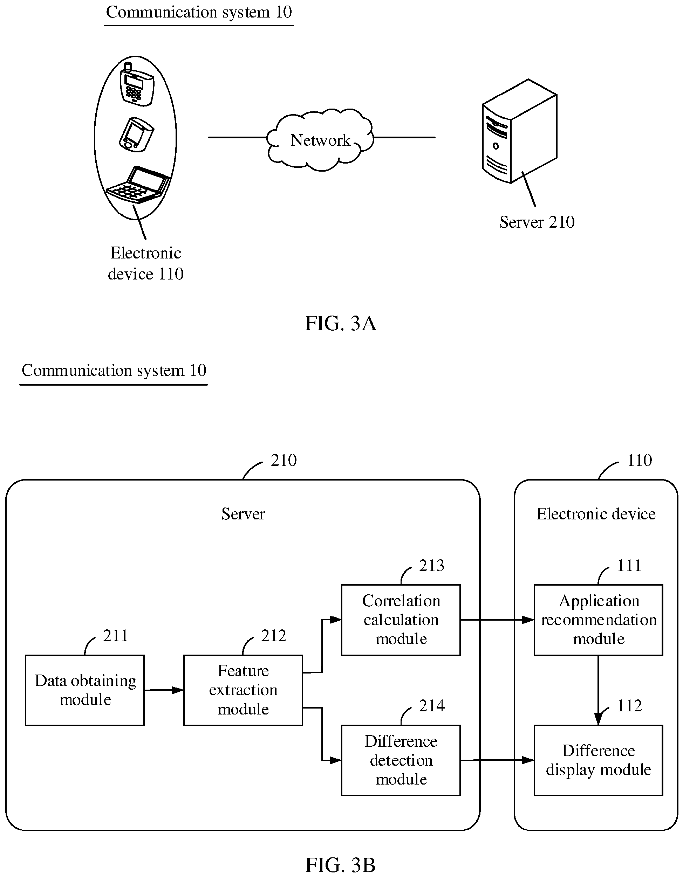

FIG. 3A is a diagram of a structure of a communication system according to an embodiment of this application.

As shown in FIG. 3A, a communication system 10 provided in this application may include an electronic device 110 and a server 210.

The electronic device 110 is configured to: run applications of various types, initiate different types of requests to the server 210, and obtain responses corresponding to the different types of requests from the server 210.

In some embodiments, the electronic device 110 may run an application market.

The application market may be configured to: in response to an operation 1 for viewing a details page of an application 1, send a request 1 for viewing the detail page of the application 1 to the server 210, and may be further configured to receive an application recommendation list of the application 1 from the server 210, and display description information of the application 1 and the application recommendation list of the application 1 on the details page of the application 1.

The operation 1 mentioned in this application may not only trigger displaying the description information of the application 1 on the details page of the application 1, but also trigger displaying the application recommendation list of the application 1 on the details page of the application 1. The operation 1 mentioned in this application may include an operation that is triggered on the description information such as an icon, a name, and an image (for example, a picture or a video animation) of the application 1. The operation 1 may be of a type like touching and holding, tapping, double-tapping, or sliding.

When the application recommendation list of the application 1 may include an application 2, the application market is further configured to: in response to an operation 21 for viewing the application 2 in the application recommendation list of the application 1, send a request 2 for viewing differentiated information between the application 2 and the application 1 to the server 210, and may be further configured to receive the differentiated information between the application 2 and the application 1 from the server 210, and display the differentiated information between the application 2 and the application 1.

The operation 21 mentioned in this application may trigger displaying of the differentiated information between the application 2 and the application 1. The operation 21 may include an operation that is triggered on description information such as an icon, a name, and an image (for example, a picture or a video animation) of the application 2 in the application recommendation list of the application 1. The operation 21 may be of a type such as touching and holding, tapping, double-tapping, or sliding.

In addition, in addition to viewing the differentiated information of the application 2, the application market is further configured to: in response to an operation 22 for viewing a details page of the application 2 in the application recommendation list of the application 1, send a request 3 for viewing the details page of the application 2 to the server 210, and may be further configured to receive an application recommendation list of the application 2 from the server 210, and display the description information of the application 2 and the application recommendation list of the application 2 on the details page of the application 2.

The operation 22 mentioned in this application may trigger displaying of the details page of the application 2. The operation 22 may include an operation that is triggered on the description information such as an icon, a name, and an image (for example, a picture or a video animation) of the application 2 in the application recommendation list of the application 1. The operation 22 may be of a type such as touching and holding, tapping, double-tapping, or sliding.

In addition, the type of the operation 21 is different from that of the operation 22. For example, the operation 21 is a touch and hold operation, and the operation 22 is a tap operation. Therefore, an interface layout of the details page of the application 1 may be optimized, to avoid occupying typesetting space of the details page of the application 1.

In addition, in addition to viewing the differentiated information and the details page of the application 2, the application market is further configured to: in response to an operation 23 for downloading the application 2 in the application recommendation list of the application 1, send a request 4 for downloading an installation package/patch package of the application 2 to the server 210, and may be further configured to receive the installation package/patch package of the application 2 or a download address of the installation package/patch package from the server 210, and install or update the application 2 in the electronic device 110.

The operation 23 mentioned in this application may further trigger installation or update of the application 2 in the electronic device 110. The operation 23 may include an operation that is triggered on a control in the application recommendation list of the application 1 or the differentiated information of the application 2. The operation 23 may be of a type such as touching and holding, tapping, double-tapping, or sliding.

The electronic device 110 may be a device like a mobile phone, a tablet computer, a notebook computer, a wearable device, a vehicle-mounted device, an augmented reality (augmented reality, AR)/virtual reality (virtual reality, VR) device, an ultra-mobile personal computer (ultra-mobile personal computer, UMPC), a netbook, a personal digital assistant (personal digital assistant, PDA), a smart television, a smart screen, a high-definition television, a 4K television, a smart speaker, or a smart projector. A specific type of the electronic device 110 is not limited in this application.

The server 210 is configured to receive various types of requests from the electronic device 110, and transmit responses corresponding to the different types of requests to the electronic device 110.

In some embodiments, the server 210 may be a background server of the application market. The server 210 may be configured to receive, from the application market, the request 1 for viewing the details page of the application 1, and may be further configured to: in response to the request 1, determine the application recommendation list of the application 1, and send the application recommendation list of the application 1 to the application market. The application recommendation list of the application 1 may include the application 2.

The server 210 is further configured to receive, from the application market, the request 2 for viewing the differentiated information of the application 2 in the application recommendation list of the application 1, and may be further configured to: in response to the request 2, determine the differentiated information between the application 2 and the application 1, and send the differentiated information between the application 2 and the application 1 to the application market.

The server 210 is further configured to receive, from the application market, the request 3 for viewing the details page of the application 2, and may be further configured to: in response to the request 3, determine the application recommendation list of the application 2, and send the application recommendation list of the application 2 to the application market.

The server 210 is further configured to receive, from the application market, the request 4 for downloading the application 2, and may be further configured to: in response to the request 4, determine the installation package/patch package of the application 2 or the download address of the installation package/patch package, and send the installation package/patch package of the application 2 or the download address of the installation package/patch package to the application market.

Specific implementations of the request 1, the request 2, the request 3, and the request 4 are not limited in this application.

The server 210 may be an independent physical server, a server cluster or a distributed system including a plurality of physical servers, or a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), and a big data and artificial intelligence platform.

The electronic device 110 and the server 210 may be directly or indirectly connected in a wired or wireless communication manner. The wired communication manner may be a coaxial cable, an optical fiber, a digital subscriber line (digital subscriber line, DSL), or the like. The wireless communication manner may be Bluetooth, infrared, wireless (Wi-Fi), microwave, or the like.

In some embodiments, a network may be used as a medium for communication between the electronic device 110 and the server 210, and the network may be a wide area network, a local area network, or a combination thereof. For example, this application may be implemented by using a cloud technology (cloud technology). The cloud technology is a hosting technology that unifies a series of resources such as hardware, software, and a network in a wide area network or a local area network to implement data computing, storage, processing, and sharing.

With reference to FIG. 3B, the following describes in detail a diagram of a system structure in which the electronic device 110 and the server 210 implement the application recommendation method in this application.

FIG. 3B is a block diagram of software structures of the electronic device 110 and the server 210 in the communication system shown in FIG. 3A.

As shown in FIG. 3B, the server 210 provided in this application may include a data obtaining module 211, a feature extraction module 212, a correlation calculation module 213, and a difference detection module 214. The electronic device 110 may include an application recommendation module 111 and a difference display module 112.

The data obtaining module 211 is configured to: after receiving the request 1 that is sent by the electronic device 110 and that is for viewing the details page of the application 1, obtain description information of all applications including the application 1, namely, the description information of the application 1 and description information of each remaining application other than the application 1. For the description information of each application herein, refer to the description of the description information of the application 1 mentioned above. Details are not described herein again.

Therefore, the data obtaining module 211 may provide the description information of all applications including the application 1 for the feature extraction module 212.

The feature extraction module 212 is configured to: for any application including the application 1, extract a feature of the application based on description information of the application. For example, the feature extraction module 212 extracts a feature of the application 1 based on the description information of the application 1. For another example, the feature extraction module 212 extracts a feature of each remaining application based on the description information of each remaining application.

Therefore, the feature extraction module 212 may separately input extracted features of all applications including the application 1 to the correlation calculation module 213 and the difference detection module 214.

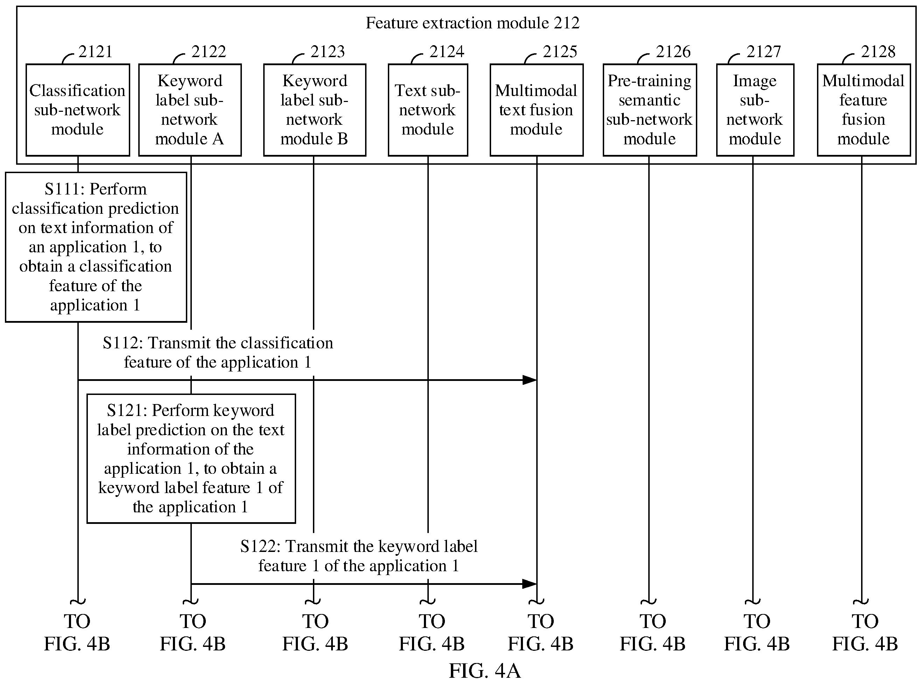

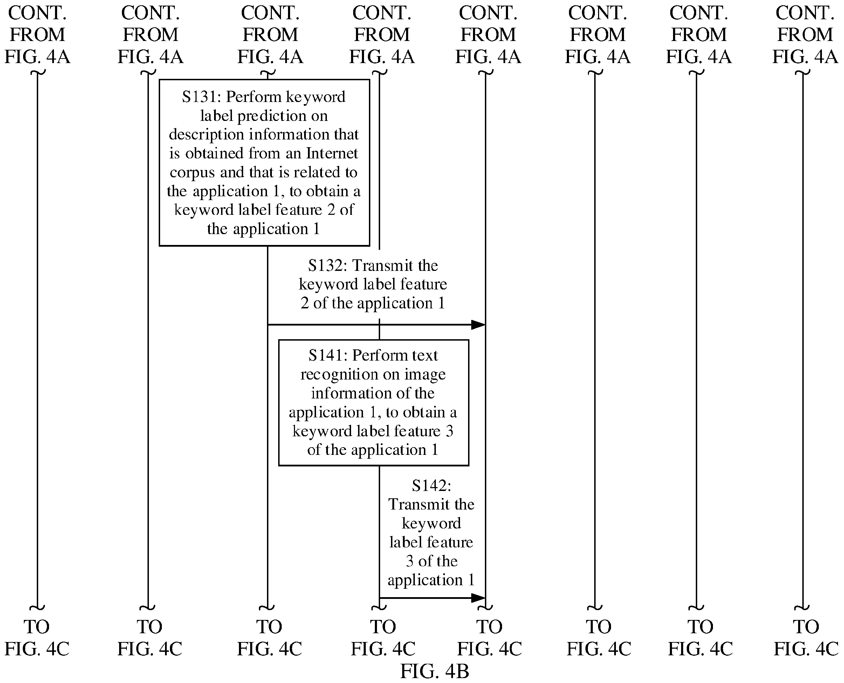

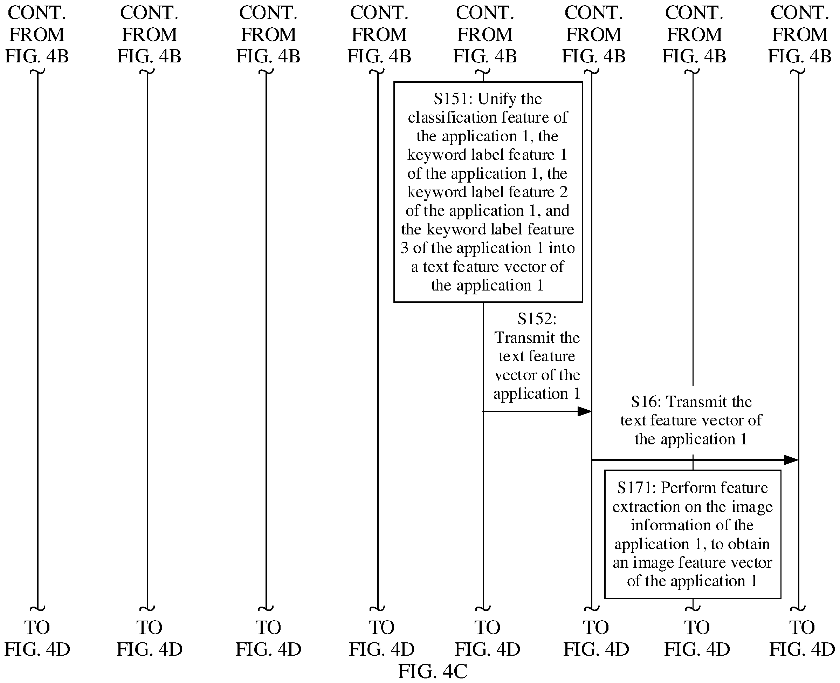

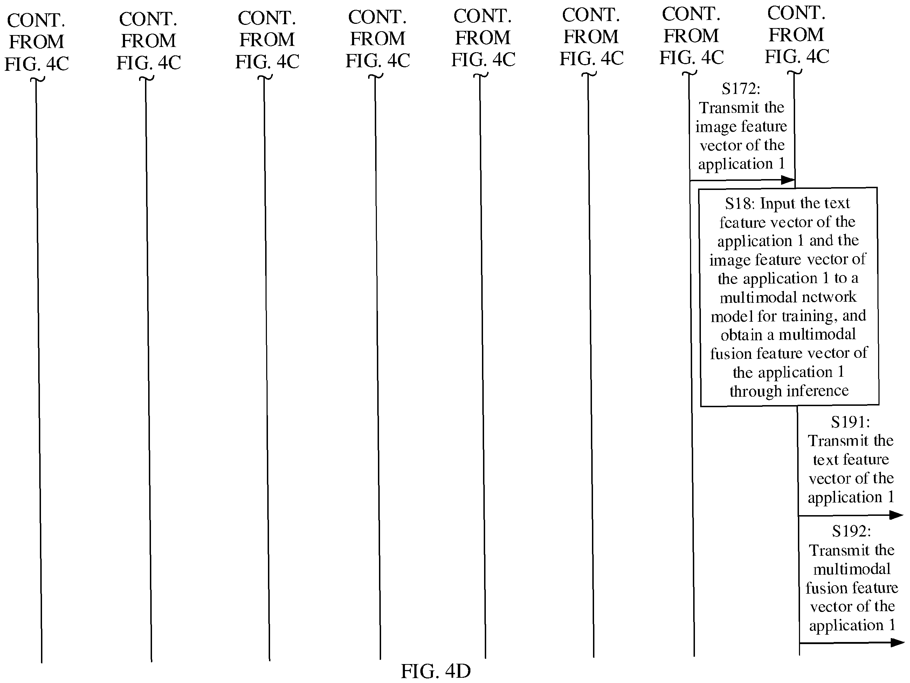

With reference to FIG. 4A to FIG. 4D, the following describes in detail a specific implementation process of extracting a feature of any application by the feature extraction module 212. For ease of description, in FIG. 4A to FIG. 4D, an example in which a feature of any application is the feature of the application 1 is used for illustration.

In this application, the feature extraction module 212 may include: a classification sub-network module 2121, a keyword label sub-network module A 2122, a keyword label sub-network module B 2123, a text sub-network module 2124, a multimodal text fusion module 2125, a pre-training semantic sub-network module 2126, an image sub-network module 2127, and a multimodal feature fusion module 2128.

Based on software modules in the feature extraction module 212 mentioned above and with reference to FIG. 4A to FIG. 4D, a specific implementation process of extracting the feature of the application 1 by each software module in the feature extraction module 212 is described in detail.

FIG. 4A to FIG. 4D are a signaling interaction diagram of extracting the feature of the application 1 by each software module in the feature extraction module 212.

As shown in FIG. 4A to FIG. 4D, an implementation process in which each software module in the feature extraction module 212 extracts the feature of the application 1 may include the following steps.

Sill: The classification sub-network module 2121 performs classification prediction on the text information of the application 1, to obtain a classification feature of the application 1.

S112: The classification sub-network module 2121 transmits the classification feature of the application 1 to the multimodal text fusion module 2125.

The classification sub-network module 2121 is configured to perform classification prediction on the text information of the application 1, and transmit the classification feature of the application 1 to the multimodal text fusion module 2125.

The classification feature of the application 1 is used to determine a type of the application 1. A type of an application mentioned in this application may be obtained through classification based on a coarse granularity or a fine granularity. This is not limited in this application.

For example, according to the coarse-grained classification manner, the type of the application 1 may be a game type. According to the fine-grained classification manner, the type of the application 1 may be a puzzle type in a game type.

For another example, according to the coarse-grained classification manner, types of the application 1 and the

EP 4 471 623 A1

application 2 may be a sports and health type. According to the fine-grained classification manner, the type of the application 1 may be a record type in a sports and health type, and the type of the application 2 may be a sports type or a health type in the sports and health type.

In some embodiments, the classification sub-network module 2121 is of a supervised type, and is specifically configured to perform classification prediction on the text information of the application 1 by using a supervised sub-network model, where a classification label of the supervised sub-network model is obtained through manually labeling.

S121: The keyword label sub-network module A 2122 performs keyword label prediction on the text information of the application 1, to obtain a keyword label feature 1 of the application 1. There may be one or more keyword label features 1 of the application 1, and a specific quantity of keyword label features 1 of the application 1 is not limited in this application.

S122: The keyword label sub-network module A 2122 transmits the keyword label feature 1 of the application 1 to the multimodal text fusion module 2125.

The keyword label sub-network module A 2122 is configured to perform keyword label prediction on the text information of the application 1, and transmit the keyword label feature of the application 1 to the multimodal text fusion module 2125.

The keyword label feature 1 of the application 1 indicates a feature of the application 1 from a text description perspective.

For example, when the application 1 is a selfie application, based on analysis of the text information of the application 1, the keyword label feature 1 of the application 1 may include facial beautification, selfie, picture editing, and the like.

In some embodiments, the keyword label sub-network module A 2122 is of the supervised type, and is specifically configured to perform label prediction on the text information of the application 1 by using a supervised sub-network model, where a label of the supervised sub-network model is obtained through manually labeling.

S131: The keyword label sub-network module B 2123 performs keyword label prediction on description information that is obtained from an Internet corpus and that is related to the application 1, to obtain a keyword label feature 2 of the application 1. There may be one or more keyword label features 2 of the application 1, and a specific quantity of keyword label features 2 of the application 1 is not limited in this application.

S132: The keyword label sub-network module B 2123 transmits the keyword label feature 2 of the application 1 to the multimodal text fusion module 2125.

The keyword label sub-network module B 2123 is configured to perform keyword label prediction on the description information that is obtained from the Internet corpus and that is related to the application 1, and transmit the keyword label feature of the application 1 to the multimodal text fusion module 2125.

The keyword label feature 2 of the application 1 is used to enrich/supplement the feature of the application 1 from the text description perspective.

For example, when the application 1 is a selfie application, based on an analysis of the Internet corpus about the application 1, the keyword label feature 2 of the application 1 may include facial beautification, selfie, picture collage, picture editing, and the like.

In some embodiments, the keyword label sub-network module B 2123 is of an unsupervised type, and is specifically configured to collect, in an unsupervised manner, statistics on a word frequency of the description information that is related to the application 1 and that is obtained from the Internet corpus, to obtain the keyword label feature 2.

S141: The text sub-network module 2124 performs text recognition on the image information of the application 1, to obtain a keyword label feature 3 of the application 1.

There may be one or more keyword label features 3 of the application 1, and a specific quantity of keyword label features 3 of the application 1 is not limited in this application.

S142: The text sub-network module 2124 transmits the keyword label feature 3 of the application 1 to the multimodal text fusion module 2125.

The text sub-network module 2124 is configured to perform text recognition on the image information of the application 1 by using a technology like optical character recognition (optical character recognition, OCR), and transmit the keyword label feature 3 of the application 1 to the multimodal text fusion module 2125.

The keyword label feature 3 of the application 1 indicates a feature of the application 1 in a text part from an image description perspective.

For example, when the application 1 is a selfie application, based on an analysis of a text "image pasting" in the image information of the application 1, the keyword label feature 3 of the application 1 may include: image pasting, image editing, and the like.

It should be noted that there is no time sequence between S111, S121, S131, and S141, and S111, S121, S131, and S141 may be performed simultaneously or sequentially.

S151: The multimodal text fusion module 2125 unifies the classification feature of the application 1, the keyword label feature 1 of the application 1, the keyword label feature 2 of the application 1, and the keyword label feature 3 of the application 1 into a text feature vector of the application 1.

S152: The multimodal text fusion module 2125 transmits the text feature vector of the application 1 to the pre-training semantic sub-network module 2126.

The multimodal text fusion module 2125 is configured to: unify the classification feature of the application 1 and the keyword label feature of the application 1 into the text feature vector of the application 1, and transmit the text feature vector of the application 1 to the pre-training semantic sub-network module 2126.

The text feature vector of the application 1 indicates a comprehensive feature of the application 1 from the text description perspective. The text feature vector of the application 1 may be vectorized in a form such as a matrix or a mathematical symbol.

S16: The pre-training semantic sub-network module 2126 transmits the text feature vector of the application 1 to the multimodal feature fusion module 2128.

S171: The image sub-network module 2127 performs feature extraction on the image information of the application 1, to obtain an image feature vector of the application 1. The image feature vector of the application 1 indicates a feature of the application 1 on an image part from the image description perspective.

S172: The image sub-network module 2127 transmits the image feature vector of the application 1 to the multimodal feature fusion module 2128.

The image sub-network module 2127 is configured to perform feature extraction on the image information of the application 1, and transmit the image feature vector of the application 1 to the multimodal feature fusion module 2128.

The image feature vector of the application 1 indicates a feature of the application 1 on an image part from the image description perspective. The image feature vector of the application 1 may be vectorized in a form such as a matrix or a mathematical symbol.

In some embodiments, the image sub-network module 2127 is of an unsupervised type, and is specifically configured to extract a feature such as unsupervised style content on the image information of the application 1.

The image sub-network module 2127 may input the image information of the application 1 to a neural network model, obtain a weight of the image information of the application 1 in the neural network model by training the neural network model, and extract the image feature vector of the application 1 from a middle layer of the neural network model.

It should be noted that both the keyword label feature 3 of the application 1 and the image feature vector of the application 1 are obtained from the image information of the application 1, and may represent two modes of the image information of the application 1, that is, two modes of the same information.

In addition, there is no time sequence between S16 and S172, and S16 and S172 may be performed simultaneously or sequentially.

S18: The multimodal feature fusion module 2128 inputs the text feature vector of the application 1 and the image feature vector of the application 1 to a multimodal network model for training, and obtains a multimodal fusion feature vector of the application 1 through inference.

The multimodal fusion feature vector of the application 1 indicates a fusion feature of the application 1 from the text description perspective and the image description perspective. The multimodal fusion feature vector of the application 1 may be vectorized in a form such as a matrix, a mathematical symbol, or the like.

S191: The multimodal feature fusion module 2128 transmits the text feature vector of the application 1 to the correlation calculation module 213.

S192: The multimodal feature fusion module 2128 transmits the multimodal fusion feature vector of the application 1 to the difference detection module 214.

In a specific embodiment, the application 1 is a Huawei Health application.

The text information of the application 1 may include: The Huawei Health application provides professional sports recording and training courses such as fat reduction and body shaping, and integrates scientific sleep and health services, to help users run faster and farther and become healthier. The text information also includes the following content:

1. Cooperate with Huawei/Honor smart wearable devices to accurately monitor different sleep stages (light sleep, deep sleep, rapid eye movement, and wake), and provide scientific sleep quality assessment and improvement suggestions to help users sleep soundly.

2. Get rid of limitations of time, place and equipment, let users exercise with bare hands anytime and anywhere, provide well-designed training courses such as "fat reduction and body shaping, running warm-up, office stretching", and become a fitness coach in the users' "pockets".

3. Accurate walking, running, and cycling records, counts steps with low power consumption, and clearly record sports data such as running tracks, heart rate, cadence, and pace.

4. Support online training plan from 5 km to full marathon for running training plans, so that users can run faster, farther, and safer than ever whether the user is a novice or a marathon old hand.

5. Data access of well-known smart health accessories at home and abroad for management of health indicators such as blood pressure, blood sugar, and weight, and help users record and track health status in a plurality of dimensions.

6. Support step data sharing to WeRun, QQ Health, Alipay Sports and another third-party platform in terms of data sharing.

7. Rich online activities and sports health knowledge, colorful walking and running activities, make sports more fun, and also provide surprise gifts. Selected sports and health information to help users exercise reasonably and scientifically and become healthier.

8. Integrate with Huawei Wear application data to provide more complete and unified sports and health services.

The description information that is obtained from the Internet corpus and that is related to the application 1 may include the following content:

1. Test case v1.0 for connecting a third-party application to the Huawei Health platform through a device-side Java interface; and test case v1.0 for connecting a third-party service to the Huawei Health platform through a device-side JS.

2. The Huawei Health application (mobile pedometer) provides 24-hour sports records and health services for users. Various reports enable users to view sports and health data clearly. Smart accessories allow users to record various parameters of the body of the user...

3. Huawei Health is a smart sports device application designed for users. Many users wear Huawei Watch. Huawei Health is a smart application that connects to Huawei Watch. Users can clearly view various sports data through Huawei Watch...

4. Huawei Health 4.0.0 (mobile phone version) is software that provides users with various health and sports courses and sports data recording. A plurality of recording tools monitor users throughout the day and record users' walking data, sports volume, and body consumption index in real time...

5. As the saying goes, the body is the capital of the revolution. Having a healthy body is the key to a happy life. How to enjoy a healthy life and maintain self-discipline, it is best to have an application to help users manage this, and sports and health software can solve this problem...

6. The Huawei Health application provides users with professional sports recording and training courses such as fat reducing and body shaping, and help users run faster and farther and become healthier in combination with scientific sleep and health services...

7. The Huawei Health application is software that provides 24-hour sports monitoring. The Huawei Health pedometer enables users to clearly learn about sports and health data through charts and tables. The Huawei Health application provides comprehensive sports assistance recording functions...

8. The Huawei Health application is sports and health monitoring and controlling software developed by Huawei Group. The Huawei Health application fully links smart phones and various smart wearable devices to meet daily sports and health management service requirements of millions of young users...

9. The Huawei Health application is excellent health management software. The Huawei Health application provides 24-hour sports monitoring and health services for Huawei mobile phone users. The Huawei Health application provides various charts and tables to help users learn about sports and health...

10. People currently pay more attention to physical health. Sports and health software is a platform to help users better exercise, can monitor users to complete daily sports in time, and popularize a lot of health knowledge for users...

11. Integrate with Huawei Wear application data to provide more complete and unified sports and health services.

12. Huawei Health application (official version): Everyone should be responsible for own health. Health code issues can be handled easily here, because an epidemic situation is strict. For your health, ...

13. The Huawei Health application is a mobile application that provides 24-hour sports monitoring and health services for Huawei/Honor mobile phone users. The Huawei Health application provides various data charts and tables to help users understand sports and physical and mental health data clearly...

14. The Huawei Health application is a mobile application that provides 24-hour sports monitoring and health services for Huawei mobile phone users. The Huawei Health application provides various charts and tables to help users understand sports and health data of the users clearly. It is advised to download this app...

15. A latest version of the Huawei Health application is an excellent application for users of Huawei smart health devices. The Huawei Health application supports a plurality of models. Comfortable and interesting content can be experienced to help users quickly start...

16. Downloading and installation introduction to the Huawei Health application: Huawei Health is 24-hour sports monitoring software provided by Huawei mobile phones. The software allows users to view sports and health data of the users in charts and tables and provides comprehensive sports assistance recording functions. Huawei Health...

17. The Huawei Health application is easy-to-use sports pedometer software that helps users record accurate steps every day, monitor sports and manage health data, view recent sports data clearly, and record...

18. When used with a Huawei band, the band also has functions such as alarm reminder, sedentary reminder, incoming call reminder, remote control photo taking, anti-lost reminder, and phone search. In addition, the band can share sports data to social platforms such as WeChat, Weibo, and QQ...

19. I think the Huawei Health application is really an important application for Huawei mobile phone users, and I hope that Huawei can do a good job in this application and make...

The image information of the application 1 may include the image F11, the image F12, and the image F13 in FIG. 2A.

Therefore, the classification sub-network module 2121 may obtain the classification feature of the application 1 based on the text information of the application 1, and the classification feature may include sports and health.

The keyword label sub-network module A 2122 can obtain the keyword label feature 1 of the application 1 based on the text information of the application 1, and the keyword label feature 1 may include: sports management, health management, smart wearable, physiological indicator detection, and step counting.

The keyword label sub-network module B 2123 may obtain the keyword label feature 2 of the application 1 based on the description information that is obtained from the Internet corpus and that is related to the application 1, and the keyword label feature 2 may include: Huawei Health, health and sports, fitness, and data.

The text sub-network module 2124 may obtain the keyword label feature 3 of the application 1 based on the image information of the application 1, and the keyword label feature 3 may include: full cycle, all round, health management, sports experience, fat reduction plan, diet management, excellent courses, sleep-aid music, intelligent analysis, and scientific guidance.

The multimodal text fusion module 2125 unifies the classification feature of the application 1, the keyword label feature 1 of the application 1, the keyword label feature 2 of the application 1, and the keyword label feature 3 of the application 1 into the text feature vector of the application 1.

The image sub-network module 2127 may obtain the image feature vector of the application 1 based on the image information of the application 1.

The multimodal feature fusion module 2128 may obtain the multimodal fusion feature vector [A1, A2, A3] of the application 1 based on the text feature vector of the application 1 and the image feature vector of the application 1.

It can be learned that the feature of the application 1 extracted by the feature extraction module 212 includes the text feature vector of the application 1 and the multimodal fusion feature vector of the application 1.

Therefore, for each of the remaining applications, a feature that is of each of the remaining applications and that is extracted by the feature extraction module 212 includes a text feature vector of each of the remaining applications and a multimodal fusion feature vector of each of the remaining applications, for example, a text feature vector of the application 2 and a multimodal fusion feature vector [B1, B2, B3] of the application 2.

In conclusion, the feature extraction module 212 may input all extracted text feature vectors of all applications including the application 1 to the correlation calculation module 213. In addition, the feature extraction module 212 may input all extracted multimodal fusion feature vectors of all applications including the application 1 to the difference detection module 214.

In addition, the difference detection module 214 may further obtain keyword label features 1 of all applications including the application 1 from the keyword label sub-network module A 2122, obtain keyword label features 2 of all applications including the application 1 from the keyword label sub-network module B 2123, and obtain keyword label feature 3 of all applications including the application 1 from the text sub-network module 2124.

The correlation calculation module 213 is configured to compare, based on text feature vectors of all applications including the application 1, features between the application 1 and each of the remaining applications, calculate a correlation between the application 1 and each of the remaining applications, and obtain an application recommendation list of the application 1.

The correlation calculation module 213 may determine the correlation between the application 1 and each of the remaining applications in a manner of comparing semantic similarity between the text feature vectors of the application 1 and each of the remaining applications, and obtain the application recommendation list of the application 1 based on a degree of correlation between the application 1 and each of the remaining applications.

For example, the correlation calculation module 213 may calculate, for example, a cosine distance, a Euclidean distance, and a KL distance between two text feature vectors. A shorter distance indicates a higher similarity.

Therefore, the correlation calculation module 213 may determine semantic similarity between the text feature vectors of the application 1 and each of the remaining applications.

For another example, the correlation calculation module 213 may further determine semantic similarity between the text feature vector of the application 1 and each of the remaining applications in a semantic similarity retrieval manner.

Therefore, the correlation calculation module 213 determines scores of all remaining applications based on the semantic similarity between the text feature vectors of the application 1 and each of the remaining applications, then sorts all remaining applications in sequence based on the scores of all remaining applications, and selects top N applications with highest scores as the application recommendation list of the application 1. N is a positive integer.

In addition, the correlation calculation module 213 is further configured to optimize a feature between the application 1 and each of the remaining applications with reference to log information of user behavior data.

Therefore, before calculating the semantic similarity between the text feature vectors of the application 1 and each of the remaining applications, the correlation calculation module 213 may optimize the text feature vector of each of the remaining applications. This helps optimize calculation of semantic similarity between the text feature vectors of the application 1 and each of the remaining applications.

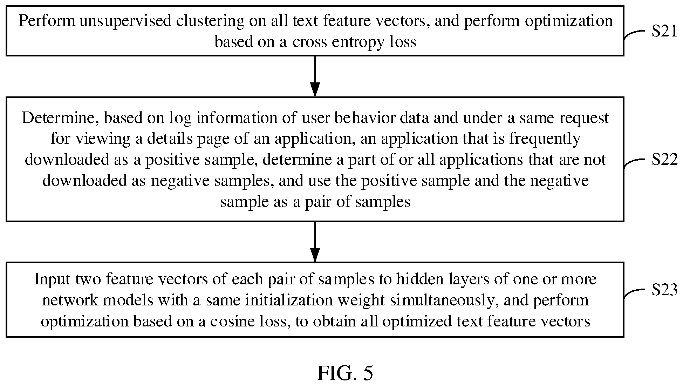

With reference to FIG. 5, the following describes in detail a specific implementation process in which the correlation calculation module 213 optimizes a text feature vector of each of the remaining applications.

FIG. 5 is a schematic flowchart of optimizing a text feature vector of each of the remaining applications by the correlation calculation module 213 shown in FIG. 3B.

As shown in FIG. 5, an implementation process in which the correlation calculation module 213 optimizes the text feature vector of each of the remaining applications may include the following steps.

S21: Perform unsupervised clustering on all text feature vectors, and perform optimization based on a cross entropy loss.

S22: Determine, based on log information of user behavior data and under a same request for viewing a details page of an application, an application that is frequently downloaded as a positive sample, determine a part of or all applications that are not downloaded as a negative sample, and use the positive sample and the negative sample as a pair of samples.

S23: Input two feature vectors of each pair of samples to hidden layers of one or more network models with a same initialization weight simultaneously, and perform optimization based on a cosine loss, to obtain all optimized text feature vectors.

Therefore, the correlation calculation module 213 may transmit the application recommendation list of the application 1 to the application recommendation module 111. For example, the application recommendation list of the application 1 may include the application 2.

The difference detection module 214 is configured to compare, based on the multimodal fusion feature vector of the application 1 and a multimodal fusion feature vector of each application in the application recommendation list of the application 1, features between the application 1 and each application in the application recommendation list of the application 1, detect a difference between images of the application 1 and each application in the application recommendation list of the application 1, for example, an image that has a greatest difference, and obtain differentiated information of each application in the application recommendation list of the application 1, that is, differentiated information between the application 2 and the application 1.

In addition, the difference detection module 214 is further configured to: obtain a feature and an advantage of each application in the application recommendation list of the application 1 based on a detected image difference between the application 1 and each application in the application recommendation list of the application 1, and obtain differentiated information of each application in the application recommendation list of the application 1 based on the detected image difference between the application 1 and each application in the application recommendation list of the application 1 and the feature and the advantage of each application in the application recommendation list of the application 1, that is, the differentiated information between the application 2 and the application 1.

For any application (for example, the application 2) in the application recommendation list of the application 1, the differentiated information of the application 2 may include the differentiated image DF of the application 2. Alternatively, the differentiated information of the application 2 may include: the differentiated image DF of the application 2 and the differentiated text DT of the application 2.

A specific implementation of the differentiated image DF of the application 2 is not limited in this application.

In some embodiments, the difference detection module 214 may calculate a semantic similarity between the multimodal fusion feature vector of the application 2 and the multimodal fusion feature vector of the application 1.

For example, the difference detection module 214 may calculate, for example, a cosine distance, a Euclidean distance, a KL distance, and the like between two multimodal fusion feature vectors. A longer distance indicates stronger difference.

Therefore, the difference detection module 214 may determine semantic similarity between the multimodal fusion feature vectors of the application 1 and each application in the application recommendation list of the application 1.

The difference detection module 214 determines the difference between the images of the application 2 and the application 1 based on the semantic similarity, and obtains the differentiated image DF of the application 2 based on the difference between the images of the application 2 and the application 1.

For example, the difference detection module 214 may determine an image that has a greatest difference between the application 2 and the application 1 as the differentiated image DF of the application 2.

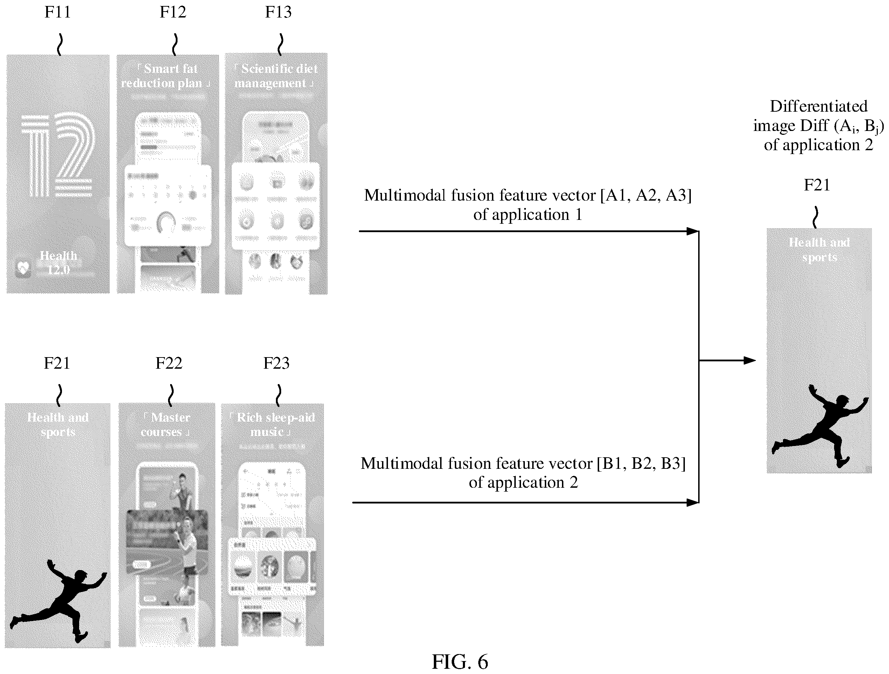

With reference to FIG. 6, the following describes in detail a specific implementation process in which the difference detection module 214 determines the differentiated image DF of the application 2.

FIG. 6 is a diagram of determining the differentiated image DF of the application 2 by the difference detection module 214 shown in FIG. 3B.

Based on the description of the foregoing embodiments, when the application 1 is a Huawei Health application and the application 2 is an XX health and sports application, the multimodal feature fusion module 2128 may obtain a multimodal fusion feature vector [A1, A2, A3] of the application 1, and a multimodal fusion feature vector [B1, B2, B3] of the application 2.

The difference detection module 214 may obtain the multimodal fusion feature vector [A1, A2, A3] of the application 1 and the multimodal fusion feature vector [B1, B2, B3] of the application 2 from the multimodal feature fusion module 2128.

As shown in FIG. 6, the difference detection module 214 may calculate the semantic similarity between the multimodal fusion feature vector [A1, A2, A3] of the application 1 and the multimodal fusion feature vector [B1, B2, B3] of the application 2. Based on the semantic similarity, the image that has the greatest difference is selected from the image F21, the image F22, and the image F23 of the application 2, that is, the image F21.

Therefore, the difference detection module 214 may determine that the differentiated information between the application 2 and the application 1 includes the differentiated image DF (that is, the image F21) of the application 2.

Further, FIG. 6 also shows the image F11, the image F12, and the image F13 of the application 1 shown in FIG. 2A.

In some embodiments, the differentiated image DF of the application 2 may be calculated using the following formula:

$$Diff\left(A_i, B_j\right) = Map\left(\arg\max_{i=1}^{n}\left(\sum_{j=1}^{m}\left(Dis\left(A_i, B_j\right)\right)\right)\right)$$

Diff() is a function for calculating the differentiated image DF between the application 1 and the application 2, Map() is a vector-to-image mapping function, and Dis() is a metric function[00257] The difference detection module 214 determines the difference between the images of for calculating a distance between vectors. $A_i$ is an $n^{th}$ multimodal fusion feature vector of the application 1, where $i\square[1, 2, ..., n]$, and n=3. $B_j$ is a $m^{th}$ multimodal fusion feature vector of the application 2, where $j\square[1, 2, ..., m]$, and m=3.

In addition to the differentiated image DF of the application 2, the difference detection module 214 may determine a text for describing the feature and the advantage of the application 2 as the differentiated text DT of the application 2.

Thus, the difference detection module 214 may take the differentiated image DF of the application 2 as a background, and add the differentiated text DT of the application 2 to the differentiated image DF of the application 2.

A specific implementation of the differentiated text DT of the application 2 is not limited in this application.

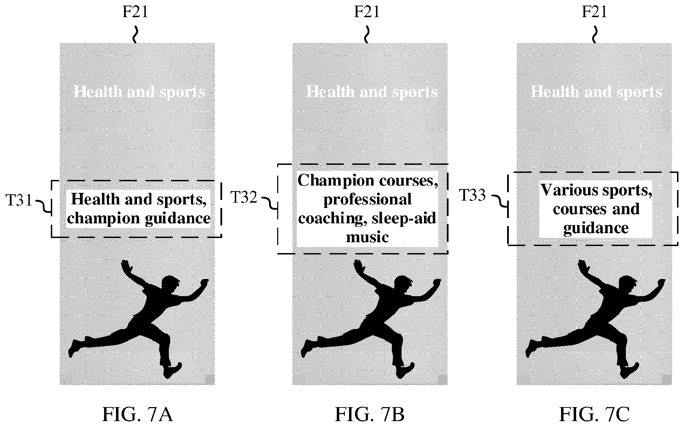

The following describes in detail a specific implementation of the differentiated text DT of the application 2 with reference to FIG. 7A to FIG. 7C.

FIG. 7A to FIG. 7C are diagrams of the differentiated information of the application 2.

For ease of description, in FIG. 7A to FIG. 7C, an example in which the application 1 is a Huawei Health application, the application 2 is an XX health and sports application, and an image that has a greatest difference between the application 2 and the application 1 is the image F21 is used for illustration.

In some embodiments, the differentiated text DT of the application 2 may be a text provided by a developer of the application 2.

In a case in which the text T31 provided by the developer of the application 2 shown in FIG. 1 includes the text "health and sports, champion guidance", as shown in FIG. 7A, the difference detection module 214 may determine that the image F21 is the differentiated image DF of the application 2, and may determine that the text T31 is the differentiated text DT of the application 2.

Therefore, the difference detection module 214 may determine that the differentiated information of the application 2 includes the image F21 and the text T31, where the text T31 is placed in the image F21.

In other embodiments, the differentiated text DT of the application 2 may be a text generated by the difference detection module 214.

Considering that the type of the application 2 may be the same as or different from the type of the application 1, and that applications of a same type and applications of different types have different emphases in terms of a text description, the difference detection module 214 may generate the differentiated text DT of the application 2 in a plurality of manners.

When the application 2 and the application 1 are of a same type, the difference detection module 214 may focus more on reflecting a unique style or function of the application 2.

The text sub-network module 2124 may obtain the keyword label features 3 $[L_{ocr}^1, L_{ocr}^2, L_{ocr}^3, ..., L_{ocr}^o]$ of the application 2 based on the image F21, the image F22, and the text in the image F23 of the application 2, and the difference detection module 214 may obtain the keyword label features 3 $[L_{ocr}^1, L_{ocr}^2, L_{ocr}^3, ..., L_{ocr}^o]$ of the application 2 from the text sub-network module 2124, where o represents a quantity of keyword label features 3. The difference detection module 214 sorts the keyword label features 3 of the application 2 in descending order of weights based on a weight value of each keyword label feature 3, and uses a preset quantity (for example, 3) of keyword label features 3 as the differentiated text DT of the application 2.

When the text T32 formed by the preset quantity of keyword label features 3 includes a text "champion courses, professional guidance, sleep-aid music", as shown in FIG. 7B, the difference detection module 214 may determine that the image F21 is the differentiated image DF of the application 2, and may determine that the text T32 is the differentiated text DT of the application 2.

Therefore, the difference detection module 214 may determine that the differentiated information of the application 2 includes the image F21 and the text T32, where the text T32 is placed in the image F21.

When the application 2 and the application 1 are of different types, the difference detection module 214 may focus more on reflecting the type and content of the application 2.

The keyword label sub-network module A 2122 may obtain the keyword label features 1 $[L_{des}^1, L_{des}^2, L_{des}^3, ...,$ $L_{des}^p]$ of the application 2 based on the text information T30 shown in FIG. 1 and the text related to the application 2 in the Internet corpus, and the difference detection module 214 may obtain the keyword label features 1 $[L_{des}^1, L_{des}^2, L_{des}^3, ...,$ $L_{des}^p]$ of the application 2 from the keyword label sub-network module A 2122, where p represents a quantity of keyword label features 1, and may determine a weight of each keyword tag feature 1 of the application 2.

The difference detection module 214 may obtain the keyword label features 2 $[L_{net}^1, L_{net}^2, L_{net}^3, ..., L_{net}^q]$ of the application 2 from the keyword label sub-network module B 2123, where q represents a quantity of keyword label features 2, and may determine a weight value of each keyword tag feature 2 of the application 2.

The difference detection module 214 may sum up weights of repeated keyword label features in the keyword label features 1 and the keyword label features 2 of the application 2, to obtain a weight value of each non-repeated keyword label feature in the keyword label features 1 and the keyword label features 2 of the application 2.

The difference detection module 214 sorts, based on the weight value of each non-repeated keyword label feature, each non-repeated keyword label feature in the keyword label features 1 and the keyword label features 2 of the application 2 in descending order of weights, and uses a preset quantity (for example, 3) of keyword label features as the differentiated text DT of the application 2.

When the text T33 formed by the preset quantity of keyword label features includes a text "various sports, courses, and guidance", as shown in FIG. 7C, the difference detection module 214 may determine that the image F21 is the differentiated image DF of the application 2, and may determine that the text T33 is the differentiated text DT of the application 2.

Therefore, the difference detection module 214 may determine that the differentiated information of the application 2 includes the image F21 and the text T33, where the text T33 is placed in the image F21.

In addition, the differentiated text DT of the application 2 may be placed at any overlay location in the differentiated image DF of the application 2. The overlay location is not limited in this application.

In some embodiments, the difference detection module 214 may determine the overlay location in combination with space and a style of the differentiated image DF of the application 2, so that the differentiated text DT of the application 2 is adapted to the differentiated image DF of the application 2.

In terms of space, the text (such as the text "health and sports" in the image F21) on the differentiated image DF of application 2 may be obscured by the differentiated text DT of application 2.

Based on the foregoing description, the difference detection module 214 may perform text area detection on the differentiated image DF of the application 2, and calculate, by using pixel distribution statistics, space in which pixels are most evenly distributed on the differentiated image DF of the application 2.

In this way, the difference detection module 214 uses a location of the space in the differentiated image DF of the application 2 as the overlay location.

In this application, the space in which pixels are most evenly distributed on the differentiated image DF of the application 2 may be calculated in a plurality of manners. In some embodiments, the difference detection module 214 may calculate, based on a font size and a font length of the differentiated text DT of the application 2, pixel space occupied by the differentiated text DT of the application 2, collect, in a sliding window manner, statistics about an average pixel value and a pixel variance of each area on the differentiated image DF of the application 2 at an area of the pixel space occupied by the differentiated text DT of the application 2, and select an area with a minimum pixel variance as the space.

The font size of the differentiated text DT of the application 2 may be adaptively selected and set with reference to the font length of the differentiated text DT of the application 2.

In terms of style, the differentiated image DF of the application 2 is used as a background without absolutely uniform color distribution, and if a color of the differentiated text DT of the application 2 is similar to a background color of the differentiated image DF of the application 2, a display effect is poor.

Based on the foregoing description, the difference detection module 214 may adjust overall transparency of remaining areas other than the overlay location in the differentiated image DF of the application 2 in a manner of background fading, background fuzzing, background blurring, or the like, and may obtain, through statistics collection in an automatic text color matching manner provided by the developer, the average pixel value of the area to which the overlay location belongs. In this way, the difference detection module 214 selects a color (for example, white or black) with a sharpest contrast as the font color of the differentiated text DT of the application 2 based on the average pixel value.

For example, if the average pixel value of the area to which the overlay location belongs is closer to a pixel value (0, 0, 0) of white, the difference detection module 214 may determine that the font color of the differentiated text DT of the application 2 is black, where a pixel value of black is (255, 255, 255).

In conclusion, the difference detection module 214 may determine parameters of the differentiated text DT of the application 2 such as specific content, an overlay location, a font color, and a font size in the differentiated image DF of the application 2.

Therefore, the difference between the application 2 and the application 1 is more reasonably displayed in an image-text combination manner, and parameters such as an overlay location, a font color, and a font size of the differentiated text DT of the application 2 in the differentiated image DF of the application 2 are adaptively adjusted, so that a display effect of the differentiated image DF of the application 2 and the differentiated text DT of the application 2 is better.

Based on the foregoing description, the difference detection module 214 may transmit differentiated information of each application in the application recommendation list of the application 1 to the difference display module 112, for example, differentiated information between the application 2 and the application 1.

Therefore, this helps adaptively display differentiated information between a same recommended application and different applications in application recommendation lists of the different applications based on respective features of the different applications.

In other words, when the application 1 and the application 3 are different applications, if the application 2 appears in the application recommendation list of the application 1 and the application recommendation list of the application 3, the differentiated information between the application 2 and the application 1 is adaptive to a feature of the application 1, the differentiated information between the application 2 and the application 3 is adaptive to a feature of the application 3, and the differentiated information between the application 2 and the application 1 and the differentiated information between the application 2 and the application 3 may be different or the same.

The application recommendation module 111 is configured to display, on the details page of the application 1, the description information of the application 1 and the application recommendation list of the application 1, to recommend, based on the application recommendation list of the application 1, the application 2 related to the application 1 to a user.

The difference display module 112 is configured to: on the basis of displaying the application recommendation list of the application 1, provide an entry for displaying the differentiated information between the application 2 and the application 1, and is further configured to display the differentiated information between the application 2 and the application 1.

The difference display module 112 needs to be further implemented on the basis that the application recommendation module 111 implements recommendation of the application 2 on the details page of the application 1.

In some embodiments, the difference display module 112 may display the differentiated information between application 2 and application 1 by using an image with a greatest image difference between the application 2 and the application 1, or an image with a greatest image difference between the application 2 and the application 1 and text used to describe a feature and an advantage of the application 2.

Based on the foregoing description, in the following embodiments of this application, the electronic device 110 and the server 210 having the structures shown in FIG. 3A and FIG. 3B are used as examples, and the application recommendation method provided in this application is described in detail with reference to the accompanying drawings and application scenarios.

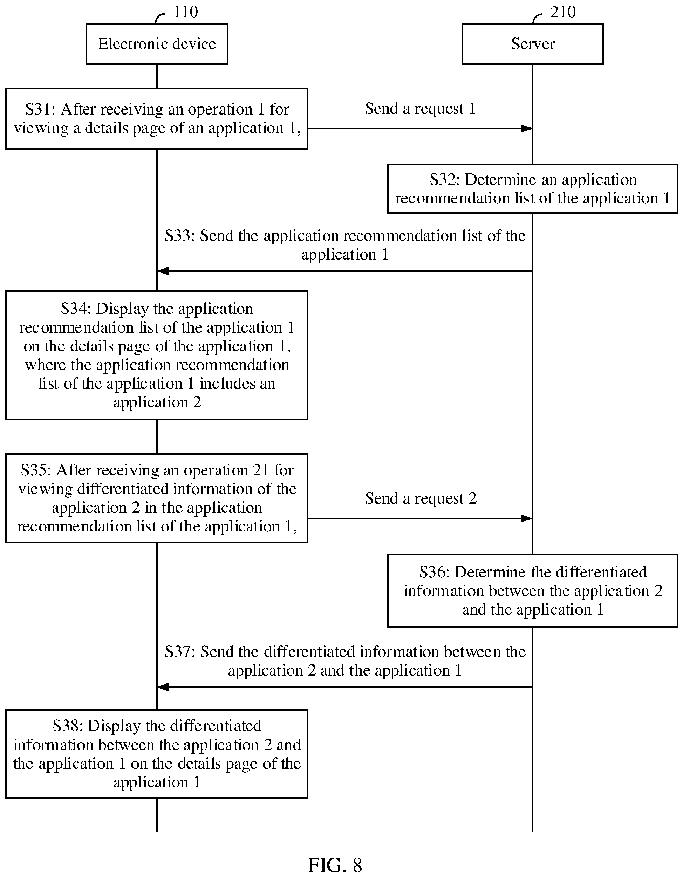

With reference to FIG. 8, the following describes in detail a specific implementation process of implementing the application recommendation method by the electronic device 110 and the server 210.

FIG. 8 is a signaling interaction diagram of the application recommendation method according to an embodiment of this application.

As shown in FIG. 8, the application recommendation method provided in this application may include the following steps.

S31: After receiving an operation 1 for viewing a details page of an application 1, the electronic device 110 sends a request 1 to the server 210.

After receiving the operation 1, the electronic device 110 may trigger an application recommendation module 111 in the electronic device 110. The application recommendation module 111 in the electronic device 110 may send the request 1 to the server 210, to facilitate obtaining an application recommendation list of the application 1 from the server 210.

S32: After receiving the request 1, the server 210 determines the application recommendation list of the application 1.

A data obtaining module 211 and a feature extraction module 212 in the server 210 obtain text feature vectors of all applications including the application 1, and the correlation calculation module 213 in the server 210 calculates, based on the text feature vectors of all applications including the application 1, a correlation between the application 1 and each of the remaining applications, to obtain the application recommendation list of the application 1.

S33: The server 210 sends the application recommendation list of the application 1 to the electronic device 110.

The server 210 may transmit the application recommendation list of the application 1 to the application recommendation module 111 in the electronic device 110.

S34: The electronic device 110 displays the application recommendation list of the application 1 on the details page of the application 1, where the application recommendation list of the application 1 includes an application 2.

The application recommendation module 111 in the electronic device 110 may recommend the application 2 in the application recommendation list of the application 1 in at least one manner such as an icon, a name, or an image of an application.

S35: After receiving an operation 21 for viewing differentiated information of the application 2 in the application recommendation list of the application 1, the electronic device 110 sends a request 2 to the server 210.

After receiving the operation 21, the electronic device 110 may trigger a difference display module 112 in the electronic device 110. The difference display module 112 in the electronic device 110 may send the request 2 to the server 210, to facilitate obtaining the differentiated information between the application 2 and the application 1 from the server 210.

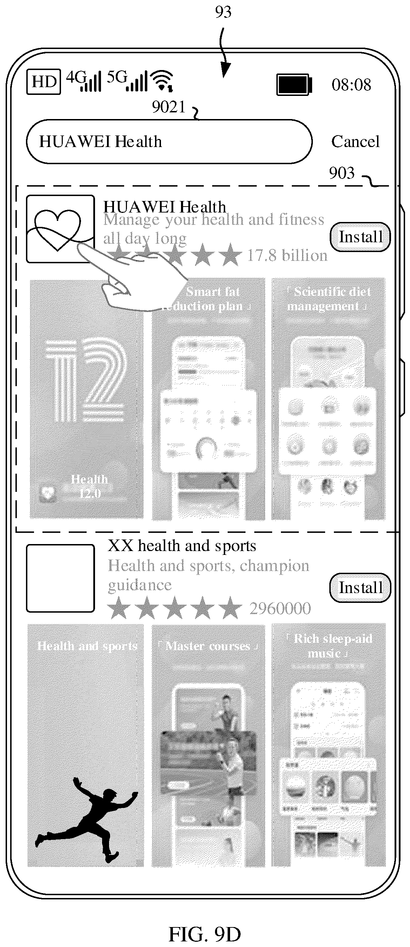

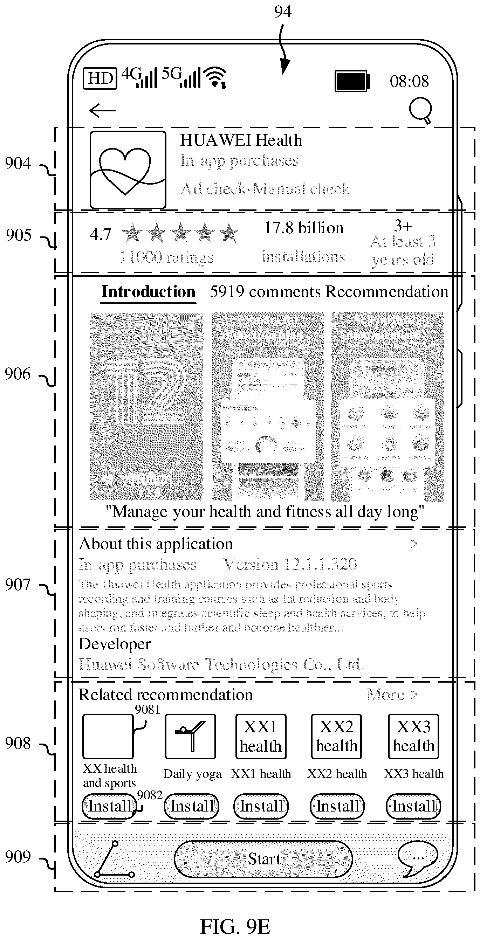

It should be noted that S31 and S34 correspond to descriptions of the embodiments in FIG. 9D and FIG. 9E.

S36: After receiving the request 2, the server 210 determines the differentiated information between the application 2 and the application 1.

The data obtaining module 211 and the feature extraction module 212 in the server 210 obtain a multimodal fusion feature vector of the application 1 and a multimodal fusion feature vector of the application 2. A difference detection module 214 in the server 210 determines a difference between the application 2 and the application 1 based on the multimodal fusion feature vector of the application 1 and the multimodal fusion feature vector of the application 2, and obtains the differentiated information between the application 2 and the application 1, for example, a differentiated image DF of the application 2 and differentiated text DT of the application 2, or a differentiated image DF of the application 2.

S37: The server 210 sends the differentiated information between the application 2 and the application 1 to the electronic device 110.

The server 210 may transmit the differentiated information between the application 2 and the application 1 to the difference display module 112 in the electronic device 110.

S38: The electronic device 110 displays, on the details page of the application 1, the differentiated information between the application 2 and the application 1.

The difference display module 112 in the electronic device 110 may display, on the details page of the application 1, the differentiated information between the application 2 and the application 1 in an image-text combination/image manner, for example, the differentiated image DF of the application 2 and the differentiated text DT of the application 2, or the differentiated image DF of the application 2.

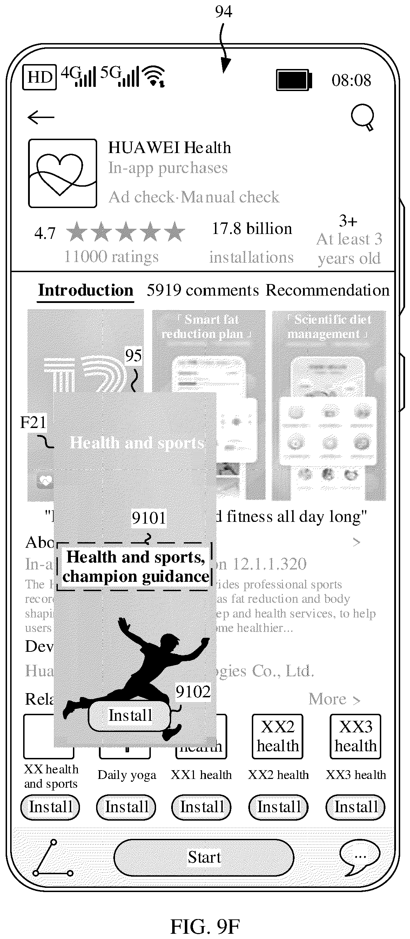

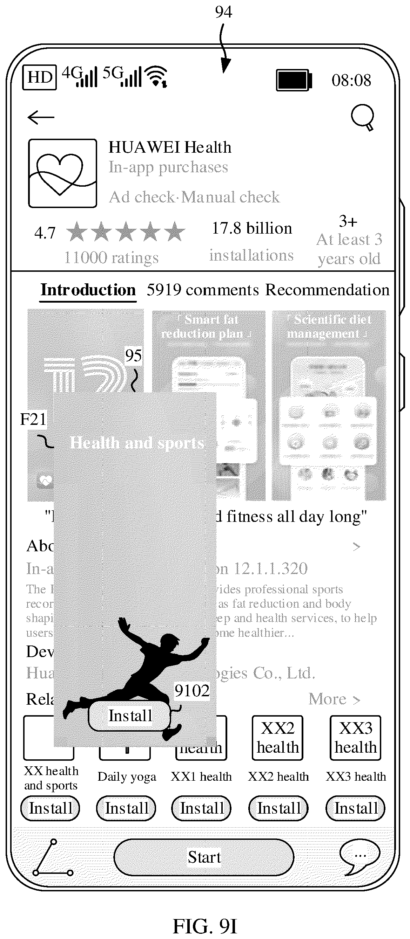

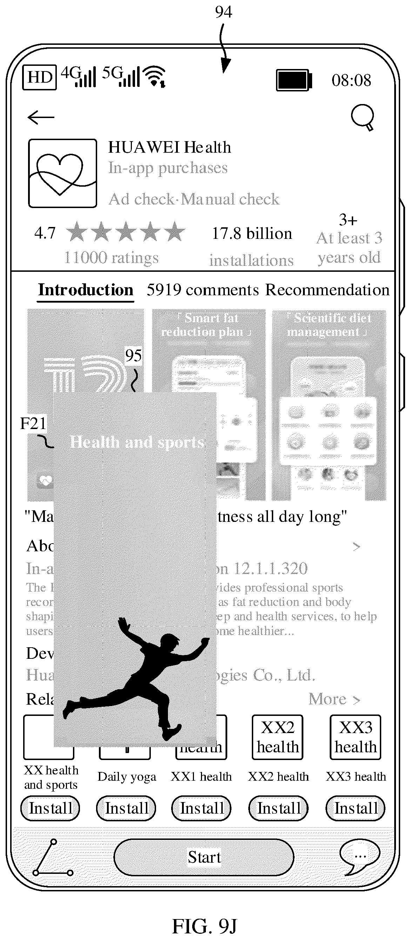

It should be noted that S35 and S38 correspond to descriptions of the embodiments in FIG. 9E to FIG. 9J. The differentiated information between the application 2 and the application 1 includes the differentiated image DF of the application 2 and the differentiated text DT of the application 2, as shown in FIG. 9F to FIG. 9H. The differentiated information between the application 2 and the application 1 includes the differentiated image DF of the application 2, as shown in FIG. 9I and FIG. 9J.

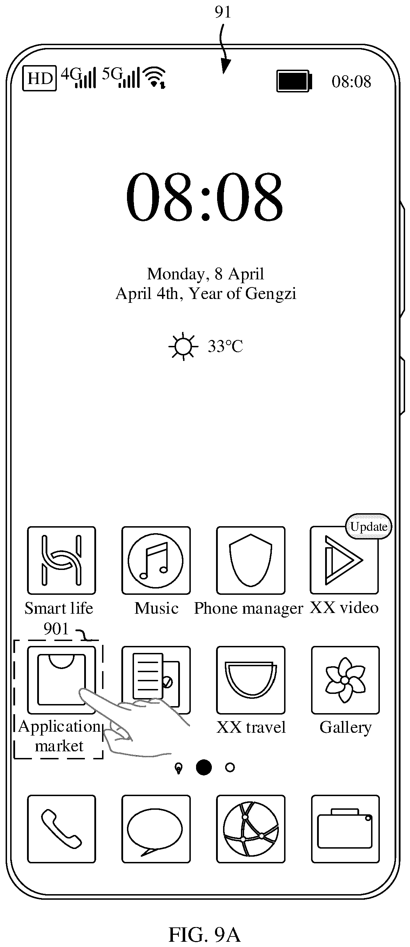

With reference to FIG. 9A to FIG. 9K, the following describes in detail a specific implementation process of implementing the application recommendation method by the electronic device 110 and the server 210.

FIG. 9A to FIG. 9K are diagrams of human-machine interaction interfaces according to an embodiment of this application.

For ease of description, in FIG. 9A to FIG. 9K, the application 1 is a Huawei Health application, the application 2 is an XX health and sports application, and the Huawei Health application and the XX health and sports application are not installed on a mobile phone. In addition, an example in which the window 12 shown in FIG. 2C and FIG. 2E displays differentiated information of the XX health and sports application is used for illustration.

The mobile phone may display a user interface 91 shown as an example in FIG. 9A. The user interface 91 may be a home screen (home screen) of a desktop, and the user interface 91 may include but is not limited to: a status bar, a navigation bar, a calendar indicator, a weather indicator, and a plurality of application icons, for example, an icon of a smart life application, an icon of a music application, an icon of a phone manager application, an icon of an XX video application, an icon 901 of an application market, an icon of a memo, an icon of an XX travel application, an icon of a gallery application, an icon of a phone application, an icon of a messages application, an icon of a browser, and an icon of a camera.

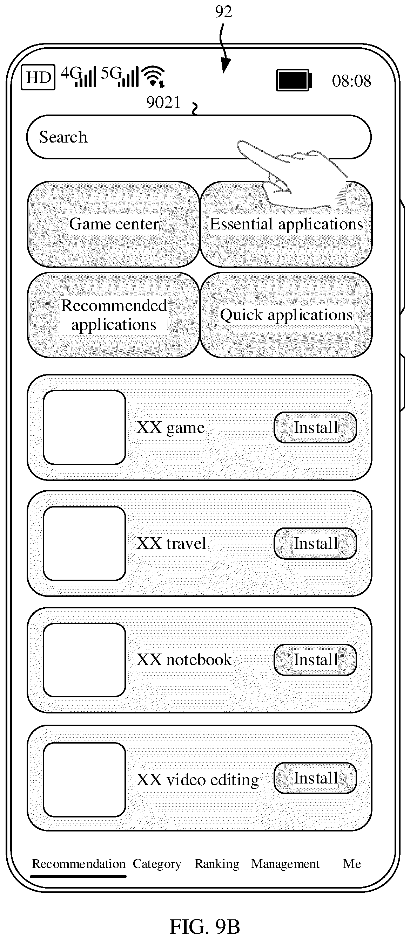

After detecting an operation (for example, a tap operation performed on the icon 901 of the application market shown in FIG. 9A) indicated by a user to open the application market, the mobile phone may display a user interface 92 shown as an example in FIG. 9B. The user interface 92 may be a user interface of the application market, for example, a main interface.

In FIG. 9B, the user interface 92 may include a search box 9021. The search box 9021 is configured to provide an entry for search target content (for example, a name of any application or another application related to the application).

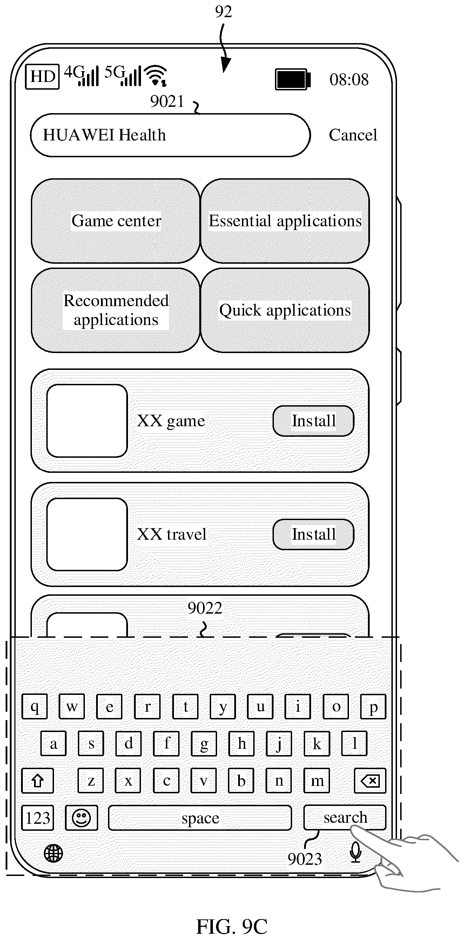

After detecting an operation (for example, an operation of entering target content "Huawei Health" in the search box 9021 shown in FIG. 9B) indicated by the user to search for the Huawei Health application, the mobile phone may display, on the user interface 92, the search box 9021 and a window 9022 shown as an example in FIG. 9C. The window 9022 is configured to display an input keyboard, and provide an entry for inputting the target content for the search box 9021. The search box 9021 is further configured to display the target content entered by using the window 9022.

In FIG. 9C, the window 9022 may include a control 9023. The control 9023 is configured to provide an entry for searching for the target content.

After detecting the operation (for example, a tap operation performed on the control 9023 shown in FIG. 9C) indicated by the user to search for the Huawei Health application, the mobile phone may display a user interface 93 shown as an example in FIG. 9D. The user interface 93 may be a user interface of the application market, and is used to display a result of searching for the target content.

In FIG. 9D, the user interface 93 may include an area 903. The area 903 is used to display description information such as an icon, a name, an application description, a download count, an evaluation level, and a function interface of the Huawei Health application, display an application recommendation list of the Huawei Health application, and provide an entry to a details page of the Huawei Health application.

After detecting an operation (for example, a tap operation performed on the icon of the Huawei Health application in the area 903 shown in FIG. 9D) indicated by the user to view the details page of the Huawei Health application, the mobile phone may display a user interface 94 shown as an example in FIG. 9E. The user interface 94 may be a user interface of the Huawei Health application, for example, the details page of the Huawei health application. It should be noted that the foregoing process may correspond to S31 and S34 in the embodiment shown in FIG. 8.

In FIG. 9E, the user interface 94 may include an area 904, an area 905, an area 906, an area 907, an area 908, and an area 909.

The area 904 is used to display description information such as an icon, a name, and other descriptions of the Huawei Health application.

The area 905 is used to display description information such as a rating score, an evaluation level, a quantity of raters, a download count, and a lifetime of the Huawei Health application.

The area 906 is used to display description information such as a function interface, evaluation information, a recommendation description, and a function description of the Huawei Health application.

The area 906 may include an image F11, an image F12, and an image F13 of the application 1.

The area 907 is used to display description information such as a function introduction and a developer of the Huawei Health application.

The area 908 is used to display an application recommendation list of the Huawei Health application, such as the XX health and sports application, provide an entry for installing or updating each recommended application, and provide an entry for displaying a details page and differentiated information of each recommended application.

The area 908 may include an icon 9081 of the XX health and sports application, a name of the XX health and sports application, and a control 9082. The icon 9081 of the XX health and sports application is used to provide an entry for installing the XX health and sports application, and provide an entry for displaying a details page and differentiated information of the XX health and sports application. The control 9082 is configured to provide an entry for installing the XX health and sports application.

The area 909 is used to provide an entry for sharing the Huawei Health application, installing the Huawei Health application, viewing evaluation information of the Huawei Health application, and starting the Huawei Health application.

In addition, the mobile phone may also provide the user with an entry for downloading, updating, and starting the XX health and sports application based on the differentiated image DF of the XX health and sports application.

In some embodiments, after detecting an operation (for example, an operation of sliding to the left performed in the area 906 shown in FIG. 9E) indicated by the user to view another image of Huawei Health, the mobile phone may display the another image of the application 1 in the area 906.

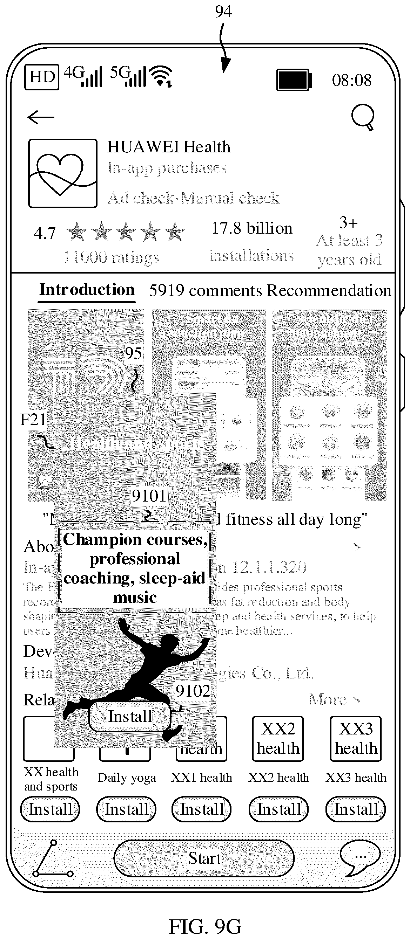

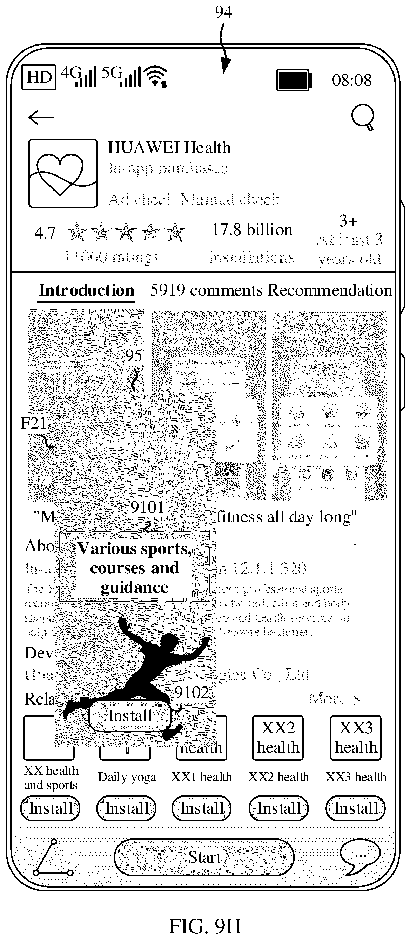

After detecting an operation (for example, a touch and hold operation performed on the icon 9081 of the XX health and sports application shown in FIG. 9E) indicated by the user to view the differentiated information of the XX health and sports application, the mobile phone may display, on the user interface 94, a window 95 shown as an example in any one of FIG. 9F, FIG. 9G, FIG. 9H, FIG. 9I, and FIG. 9J. The window 95 is used to display the differentiated information of the XX health and sports application. It should be noted that the foregoing process may correspond to S35 and S38 in the embodiment shown in FIG. 8.

In FIG. 9F, FIG. 9G, and FIG. 9H, the window 95 may include a differentiated image DF of the XX health and sports application and differentiated text DT of the XX health and sports application. In FIG. 9I and FIG. 9J, the window 95 may include a differentiated image DF of the XX health and sports application.

The differentiated image DF of the XX health and sports application is filled in all or a part of an area of the window 95. The differentiated text DT of the XX health and sports application may be displayed in an area 9101 of the window 95, so that the differentiated text DT of the XX health and sports application is placed in the differentiated image DF of the XX health and sports application.

In FIG. 9F to FIG. 9J, the differentiated image DF of the XX health and sports application may be illustrated by using the image F21 shown in FIG. 6.

In FIG. 9F, when it is determined to use the text T31 provided by the developer of the XX health and sports application, the differentiated text DT of the XX health and sports application may be illustrated by using the text T31 shown in FIG. 7A.

In FIG. 9G, when it is determined that the XX health and sports application and the Huawei Health application are of a same type, the differentiated text DT of the XX health and sports application may be illustrated by using the text T32 shown in FIG. 7B.

In FIG. 9H, when it is determined that the XX health and sports application and the Huawei Health application are of different types, the differentiated text DT of the XX health and sports application may be illustrated by using the text T33 shown in FIG. 7C.

In addition, in FIG. 9F to FIG. 9I, the window 95 may further include a control 9102. The control 9102 is configured to provide an entry for installing the XX health and sports application.

In addition, after detecting an operation (for example, a tap operation performed on the control 9082 shown in FIG. 9E or the control 9102 shown in FIG. 9F to FIG. 9I) indicated by the user to install the XX health and sports application, the mobile phone may install the XX health and sports application in the mobile phone.

In addition, the mobile phone may also provide the user with an entry for viewing the details page of the XX health and sports application based on the differentiated image DF of the XX health and sports application.

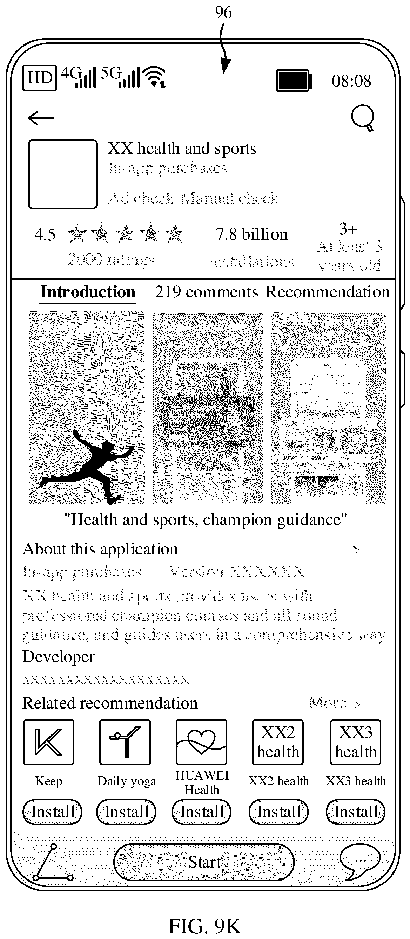

In some embodiments, after detecting an operation (for example, a tap operation performed on the icon 9081 of the XX health and sports application shown in FIG. 9E or a blank area of the window 95 shown in FIG. 9F to FIG. 9J) indicated by the user to view the details page of the XX health and sports application, the mobile phone may display a user interface 96 shown as an example in FIG. 9K. The user interface 96 is a user interface of the application market, and the user interface 96 is used to display the details page of the XX health and sports application.

In conclusion, when displaying the details page of the Huawei Health application, the mobile phone may recommend the XX health and sports application to the user, and may also display the difference between the XX health and sports application and the Huawei Health application to the user in an image-text combination/image manner. In this way, the user can quickly understand a feature and an advantage of the XX health and sports application, and the user's interest in downloading the XX health and sports application may be increased.

Based on some of the foregoing embodiments, the following describes an application recommendation method provided in this application.

For example, this application provides an application recommendation method.

The application recommendation method in this application may be performed by an electronic device. For a specific implementation of the electronic device, refer to the descriptions of the electronic device mentioned in FIG. 3A and FIG. 3B. Details are not described herein again.

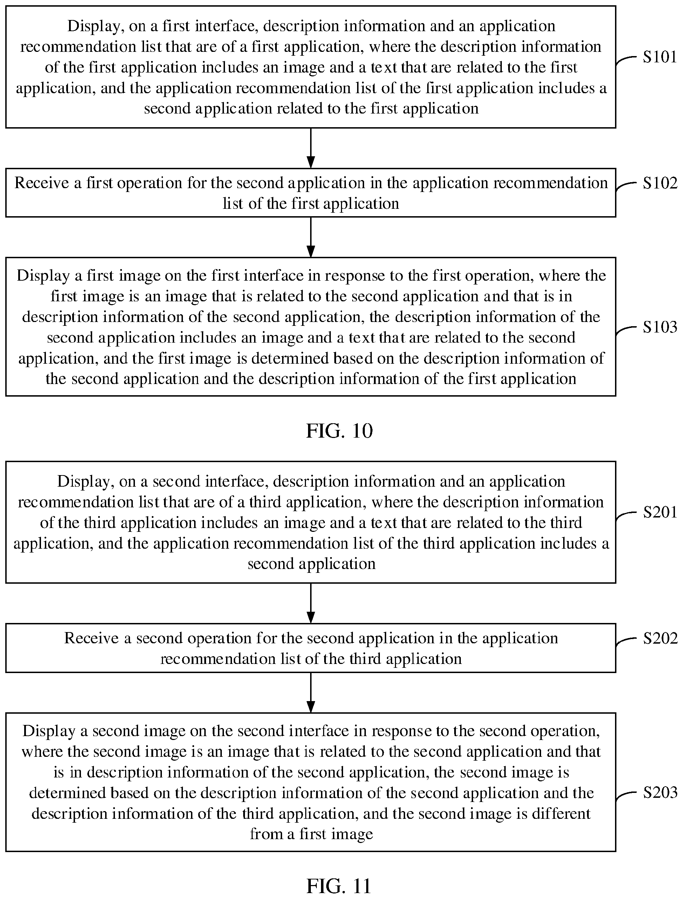

FIG. 10 is a schematic flowchart of an application recommendation method according to an embodiment of this application.

As shown in FIG. 10, the application recommendation method in this application may include the following steps.

S101: Display, on a first interface, description information and an application recommendation list that are of a first application, where the description information of the first application includes an image and a text that are related to the first application, and the application recommendation list of the first application includes a second application related to the first application.

For a specific implementation of the first interface, refer to the foregoing descriptions of the details page of the application 1, the user interface 11 shown in FIG. 2A, and the user interface 94 shown in FIG. 9E. For a specific implementation of the first application, refer to the foregoing descriptions of the application 1 and the Huawei Health application. For a specific implementation of the description information of the first application, refer to the foregoing descriptions of the description information of the application 1, the area 101, the area 102, the area 103, and the area 104 in the user interface 11 shown in FIG. 2A, and the area 904, the area 905, the area 906, the area 907, the area 908, and the area 909 in the user interface 94 shown in FIG. 9E. For a specific implementation of the application recommendation list of the first application, refer to the foregoing descriptions of the application recommendation list of the application 1, the area 104 in the user interface 11 shown in FIG. 2A, and the area 908 in the user interface 94 shown in FIG. 9E. For a specific implementation of the image related to the first application, refer to the foregoing descriptions of the image information of the application 1, the image F11, the image F12, and that image F13 that are related to the area 102 in the user interface 11 shown in FIG. 2A, and the area 906 in the user interface 94 shown in FIG. 9E. For a specific implementation of the text related to the first application, refer to the foregoing descriptions of the text information of the application 1, the log information of the user behavior data, and the text related to the area 101, the area 102, and the area 103 in the user interface 11 shown in FIG. 2A, and the area 904, the area 905, the area 906, the area 907, the area 908, and the area 909 in the user interface 94 shown in FIG. 9E. For a specific implementation of the second application, refer to the foregoing descriptions of the application 2 and the XX health and sports application.

For a specific implementation of S101, refer to the descriptions of the embodiment in FIG. 2A and the embodiments in FIG. 9D and FIG. 9E. Details are not described herein again.

S102: Receive a first operation for the second application in the application recommendation list of the first application.

For a specific implementation of the first operation, refer to the foregoing descriptions of the operation of viewing the differentiated information of the XX health and sports application and the operation of performing a touch and hold operation on the icon 9081 of the XX health and sports application shown in FIG. 9E.

For a specific implementation of S102, refer to the descriptions of the embodiments in FIG. 9E to FIG. 9J. Details are not described herein again.

S103: Display a first image on the first interface in response to the first operation, where the first image is an image that is related to the second application and that is in description information of the second application, the description information of the second application includes an image and a text that are related to the second application, and the first image is determined based on the description information of the second application and the description information of the first application.

For a specific implementation of the first image, refer to the foregoing descriptions of the differentiated image DF of the application 2, the differentiated image DF of the application 2 in the window 12 shown in FIG. 2B to FIG. 2E, the image F21 shown in FIG. 6, and the image F21 in the window 95 shown in FIG. 9F to FIG. 9J. For a specific implementation of the description information of the second application, refer to the foregoing descriptions of the description information of the application 2 and the user interface 96 shown in FIG. 9K. For a specific implementation of the application recommendation list of the second application, refer to the foregoing descriptions of the application recommendation list of the application 2 and related recommendation in the user interface 96 shown in FIG. 9K. For a specific implementation of the image related to the second application, refer to the foregoing descriptions of the image information of the application 2 and the image F21, the image F22, and the image F23 in the user interface 96 shown in FIG. 9K. For a specific implementation of the text related to the second application, refer to the foregoing descriptions of the text information of the application 2 and the text related to the user interface 96 shown in FIG. 9K.

For a specific implementation of S103, refer to the descriptions of the embodiments in FIG. 2A to FIG. 2E and the embodiments in FIG. 9F to FIG. 9J. Details are not described herein again.

In some embodiments, the first image is an image that is related to the second application and that has a greatest difference from the image related to the first application.

According to the application recommendation method provided in this application, when recommending the second application related to the first application, the electronic device may display a difference between the second application and the first application in an image manner, to facilitate accurate differentiation and quick selection by the user. This improves user experience of application recommendation, and increases a conversion rate of application recommendation. In addition, a display material of the image does not need to be obtained through manual configuration, and extra costs of application recommendation are avoided.

In addition, the second application related to the first application can be further accurately recommended. This improves correlation of application recommendation, reduces a probability of recommending an application unrelated to the first application, helps attract the user to view or download the second application, increases a click-through rate and a download count of the recommended second application, and brings better recommendation experience to the user.

In some embodiments, the electronic device may further display a first text on the first interface in response to the first operation, where the first text indicates a feature of the second application.

For a specific implementation of the first text, refer to the foregoing descriptions of the differentiated text DT of the application 2, the area 201 in the window 12 shown in FIG. 2B to FIG. 2E, the text T31, the text T32, and the text T33 in FIG. 7A to FIG. 7C, and the area 9101 in the window 95 shown in FIG. 9F to FIG. 9H. For a specific implementation of the foregoing process, refer to the descriptions of the embodiments in FIG. 2B to FIG. 2E and the descriptions of the embodiments in FIG. 9F to FIG. 9H. Details are not described herein again.

Therefore, when the electronic device recommends the second application related to the first application, an image-text combination manner is used, so that not only a difference between the second application and the first application is displayed, which facilitates accurate differentiation and quick selection by the user, but also the feature and an advantage of the second application are highlighted, so that the user can quickly have a full understanding of the second application, interest of the user in downloading the second application is increased. In addition, a display material of the image does not need to be obtained through manual configuration, and extra costs of application recommendation are avoided.

A specific implementation of the first text is not limited in this application.

In some embodiments, the first text may be placed in the first image, just as the differentiated text DT of the application 2 shown in the embodiments of FIG. 2B to FIG. 2D and

FIG. 9F to FIG. 9H is placed in the differentiated image DF of the application 2. Therefore, the difference between the second application and the first application and the feature and the advantage of the second application are more reasonably displayed in the image-text combination manner.

In some embodiments, an overlay location, a font color, and a font size of the first text are determined based on the first image. For a specific implementation of the foregoing process, refer to the foregoing descriptions that the differentiated text DT of the application 2 sets parameters such as an overlay location, a font color, and a font size based on the differentiated image DF of the application 2. Details are not described herein again.

Therefore, the electronic device may adaptively adjust parameters such as the overlay location, the font color, and the font size of the first text in the first image, so that a better display effect of the first image and the first text is ensured.

The electronic device may obtain the first text in a plurality of manners. For example, the first text includes at least one of the following texts: a text provided by a developer of the second application, a text related to the second application, or a text in the image related to the second application.

In some embodiments, the first text is provided by the developer of the second application. For a specific implementation of the foregoing process, refer to the description of the text T31 in FIG. 7A. Details are not described herein again.

In other embodiments, the first text is related to the text related to the second application and the text in the image related to the second application. For a specific implementation of the foregoing process, refer to the descriptions of the text T32 in FIG. 7B and the text T33 in FIG. 7C. Details are not described herein again.

It should be noted that, in addition to the text related to the second application and the text in the image related to the second application, the first text may also be related to description information that is related to the second application and that is obtained from an Internet corpus.

Therefore, a plurality of sources are provided for the first text, and specific implementations of the first text are enriched.

In this application, the electronic device may recommend the second application from application recommendation lists of different applications.

With reference to FIG. 11, the following describes in detail a specific implementation process in which the electronic device recommends the second application in applications other than the first application.

FIG. 11 is a schematic flowchart of an application recommendation method according to an embodiment of this application.

As shown in FIG. 11, the application recommendation method in this application may include the following steps.

S201: Display, on a second interface, description information and an application recommendation list that are of a third application, where the description information of the third application includes an image and a text that are related to the third application, and the application recommendation list of the third application includes the second application.

The second application is an application related to the third application, and the third application is different from the first application.

S202: Receive a second operation for the second application in the application recommendation list of the third application.

S203: Display a second image on the second interface in response to the second operation, where the second image is an image that is related to the second application and that is in the description information of the second application, the second image is determined based on the description information of the second application and the description information of the third application, and the second image is different from the first image.

In some embodiments, the second image is an image that is related to the second application and that has a greatest difference from the image related to the third application.

Specific implementations of S201, S202, and S203 may be respectively similar to implementations of S101, S102, and S103 in the embodiment in FIG. 10. Details are not described herein again.

In addition, the second image may be the same as the first image. A specific type of the third application is not limited in this application. In some embodiments, when the third application and the first application are of a same type, the second image may be the same as the first image. When the third application and the first application are of different types, the second image may be different from the first image.

Therefore, the electronic device may recommend a same application in application recommendation lists of different applications, and may further display different images of the application on details pages of different applications.

In addition to displaying the first image or the first image and the first text on the first interface, the electronic device may further display a trigger control on the first interface, where the trigger control is configured to trigger installation or update of the second application. In addition, when the second application is installed and does not need to be updated, the trigger control is further configured to trigger display of the details page of the second application.

For a specific implementation of the trigger control, refer to the foregoing descriptions of the control 202 in the window 12 shown in FIG. 2B to FIG. 2E and the control 9102 in the window 95 shown in FIG. 9F to FIG. 9I. For a specific implementation of the foregoing process, refer to the descriptions of the embodiments in FIG. 2B to FIG. 2E and the embodiments in FIG. 9F to FIG. 9I. Details are not described herein again.

Therefore, on the basis of displaying the image, or the image and the text, the electronic device may further provide the user with the trigger control for installing or updating the second application, so that the user can quickly install or update the second application in the electronic device.

A specific implementation of the trigger control is not limited in this application. In some embodiments, the trigger control may be placed in the first image, just as the control 9102 shown in the embodiments of FIG. 2B, FIG. 2D, and FIG. 9F to FIG. 9I is placed in the differentiated image DF of the application 2.

Therefore, the electronic device may adaptively embed the trigger control into the first image, so that a display effect of the first image is improved.

In some embodiments, the electronic device may receive a third operation for the trigger control. The electronic device may install or update the second application in the electronic device in response to the third operation.

For a specific implementation of the third operation, refer to the foregoing descriptions of the operations triggered on the control 202 in the window 12 shown in FIG. 2B to FIG. 2E and the control 9102 in the window 95 shown in FIG. 9F to FIG. 9I. For a specific implementation of the foregoing process, refer to the descriptions of the embodiments in FIG. 2B to FIG. 2E and the embodiments in FIG. 9F to FIG. 9I. Details are not described herein again.

In this application, the electronic device may obtain the description information of the first application and the application recommendation list of the first application by communicating with a server, so that the electronic device can display a details page of the first application, and may further obtain the first image and the first text, and the electronic device can display the first image on the details page of the first application.

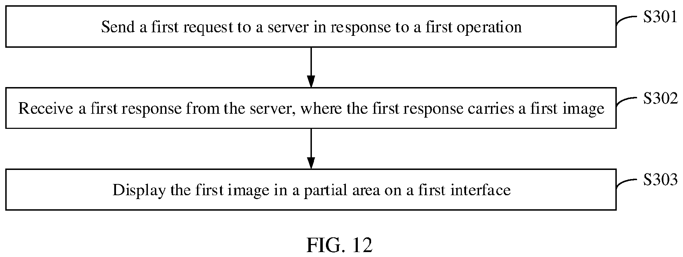

With reference to FIG. 12, the following describes in detail a specific implementation process of displaying the first image by the electronic device.

FIG. 12 is a schematic flowchart of an application recommendation method according to an embodiment of this application.

As shown in FIG. 12, the application recommendation method in this application may include the following steps.

S301: Send a first request to a server in response to the first operation.

For a specific implementation of the server, refer to the descriptions of the server in the embodiments in FIG. 3A to FIG. 3B. For a specific implementation of the first operation, refer to the foregoing descriptions of the operation 21 in S35 in the embodiment in FIG. 8. For a specific implementation of the first request, refer to the foregoing descriptions of the request 2 in S35 in the embodiment in FIG. 8. For a specific implementation of S301, refer to the foregoing descriptions of S35 in the embodiment in FIG. 8. Details are not described herein again.

S302: Receive a first response from the server, where the first response carries the first image.

For a specific implementation of the first response, refer to the foregoing descriptions of the differentiated information between the application 2 and the application 1 in S37 of the embodiment in FIG. 8. The first response is obtained by the server based on the descriptions of the embodiments in FIG. 4A to FIG. 4D, FIG. 5, FIG. 6, FIG. 7A and FIG. 7B, and FIG. 8, and the first response may further carry the first text. For a specific implementation of the first response, refer to the foregoing descriptions of the differentiated information between the application 2 and the application 1 in S37 of the embodiment in FIG. 8. For a specific implementation of the first response, refer to the foregoing descriptions of the differentiated image in S37 in the embodiment in FIG. 8. For a specific implementation of S302, refer to the foregoing descriptions of S37 in the embodiment in FIG. 8. Details are not described herein again.

S303: Display the first image in a partial area on the first interface.

For a specific implementation of the first interface, refer to the foregoing descriptions of the details page of the application 1 in S38 of the embodiment in FIG. 8. For a specific implementation of S303, refer to the foregoing descriptions of S38 of the embodiment in FIG. 8. Details are not described herein again.

Therefore, when recommending the second application, the electronic device may display, by interacting with the server, the first image that has a greatest difference between the second application and the first application.

The electronic device may provide the user with a plurality of entries for accessing the details page of the second application.

In some embodiments, the electronic device may receive a fourth operation in the first image. The electronic device may display the description information and the application recommendation list that are of the second application in the third interface in response to the fourth operation.

For a specific implementation of the fourth operation, refer to the foregoing descriptions of the operations triggered on the blank area in the window 12 shown in FIG. 2B to FIG. 2E and the blank area in the window 95 shown in FIG. 9F to FIG. 9J. For a specific implementation of the foregoing process, refer to the descriptions of the embodiments in FIG. 2B to FIG. 2E and the embodiments in FIG. 9F to FIG. 9K. Details are not described herein again.

Therefore, a new manner is provided for displaying the details page of the second application.

In some other embodiments, the electronic device may receive a fifth operation for the second application in the application recommendation list of the first application, where the fifth operation is different from the first operation. The electronic device may display the description information and the application recommendation list that are of the second application in the fifth interface in response to the fifth operation.

For a specific implementation of the fifth operation, refer to the foregoing descriptions of the operations triggered on the icon of the application 2 in the area 1041 shown in FIG. 2A and the icon 9081 of the XX health and sports application in the area 908 shown in FIG. 9E. For a specific implementation of the foregoing process, refer to the descriptions of the embodiments in FIG. 2A to FIG. 2E and the embodiments in FIG. 9E to FIG. 9K. Details are not described herein again.

Therefore, a manner of displaying the details page of the second application is considered.

Based on the descriptions of the foregoing embodiments, specific implementations of the first application and the second application are not limited in this application.

In some embodiments, the first interface is a user interface of an application market, and the first application or the second application is an application provided in the application market.

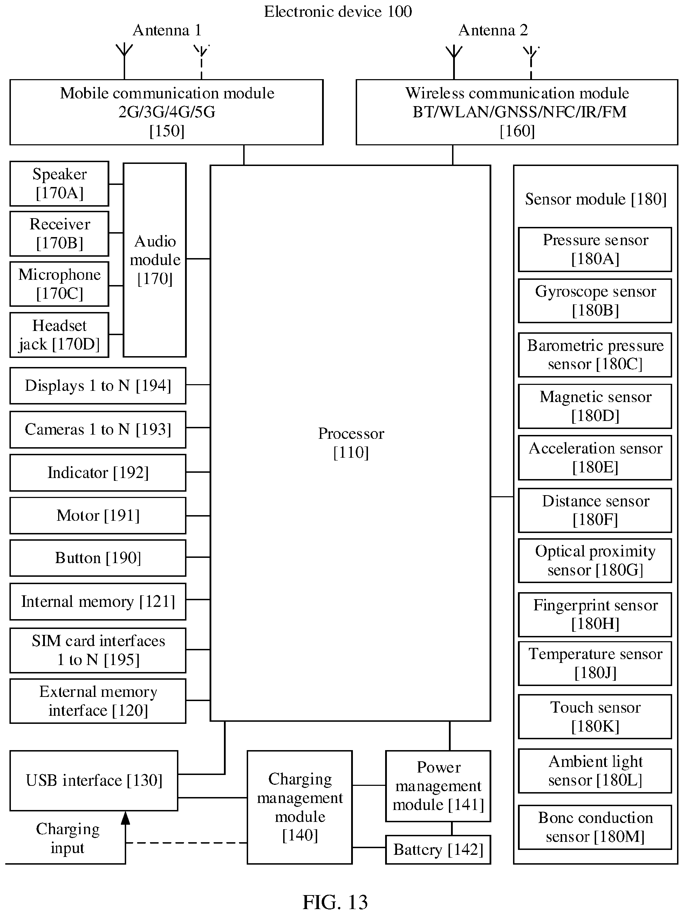

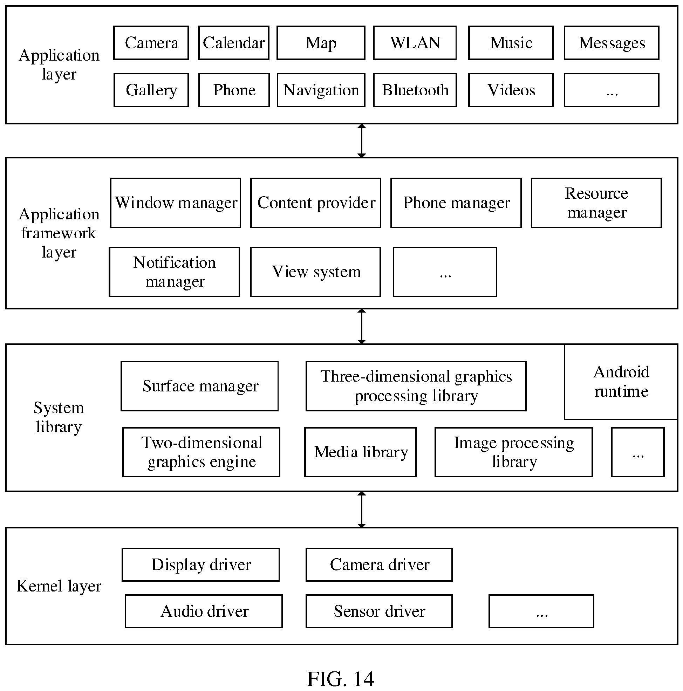

The following describes an electronic device in this application by using an example in which the electronic device is a mobile phone with reference to FIG. 13 and FIG. 14.

FIG. 13 is a diagram of a structure of an electronic device according to an embodiment of this application. As shown in FIG. 13, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, or the like.

It may be understood that the structure illustrated in this application does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured for control signals or data signals. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between modules illustrated in this application is merely an example for description, and does not constitute a limitation on the structure of the electronic device 100. In some other embodiments, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering on an electromagnetic wave signal, and transmits a processed signal to the processor 110. The wireless communication module 160 may further receive a to-be-transmitted signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further tune parameters such as exposure and a color temperature of a shooting scenario. In some embodiments, the ISP may be disposed in the camera 193.

The camera 193 may be configured to capture a static image or a video. An optical image of an object is generated through a lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or transmitting a voice message, a user may make a sound near the microphone 170C through a mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. In some embodiments, an angular velocity of the electronic device 100 around three axes (that is, axes x, y, and z) may be determined through the gyro sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario or a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitude of acceleration of the electronic device 100 in various directions (usually on three axes). A magnitude and a direction of gravity may be detected when the electronic device 100 is still. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in a headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user settings and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is also compatible with different types of SIM cards. The SIM card interface 195 is also compatible with an external memory card. The electronic device 100 interacts with a network by using the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this application, an example of a software structure of the electronic device 100 is described by using an example of an Android system with a layered architecture. A type of an operating system of the electronic device is not limited in this application, for example, an Android system, a Linux system, a Windows system, an iOS system, or a Harmony operating system (Harmony operating system, HarmonyOS).

FIG. 14 is a block diagram of a software structure of an electronic device according to an embodiment of this application. As shown in FIG. 14, software is divided into several layers by using a layered architecture, and each layer has a clear role and task. The layers communicate with each other through a software interface.

In some embodiments, the Android system is divided into four layers: an application (APP) layer, an application framework (APP framework) layer, an Android runtime (Android runtime) and system library (libraries), and a kernel (kernel) layer from top to bottom.

The application layer may include a series of application packages.

As shown in FIG. 14, the application packages may include an application (application, APP) such as Camera, Gallery, Calendar, Phone, Map, Navigation, WLAN, Bluetooth, Music, Videos, Game, Chat, Shopping, Travel, Instant Messaging (such as Messages), Smart Home, and Device Control.

The smart home application may be used to control or manage a home device having a networking function. For example, the home device may include an electric light, a television, and an air conditioner. For another example, the home device may further include an anti-theft door lock, a sound box, a floor sweeping robot, a socket, a body fat scale, a desk lamp, an air purifier, a refrigerator, a washing machine, a water heater, a microwave oven, an electric cooker, a curtain, a fan, a television, a set-top box, a door, and a window.

In addition, the application packages may further include an application such as a home screen (that is, a desktop), a leftmost screen, a control center, and a notification center.

The leftmost screen may also be referred to as a "-1 screen", and refers to a user interface (user interface, UI) obtained by sliding a screen rightward on a home screen of an electronic device until sliding to the leftmost split screen. For example, the leftmost screen may be used to place some quick service functions and notification messages, such as global search, a quick entry (a payment code, WeChat, and the like) of a page of an application, instant information, and reminders (express information, expenditure information, commuting road conditions, taxi hailing information, schedule information, and the like), and followed dynamic information (such as a football platform, a basketball platform, and stock information). The control center is a slide-up message notification bar of the electronic device, namely, a user interface displayed by the electronic device when the user performs a slide-up operation from the bottom of the electronic device. The notification center is a swipe-down message notification bar of the electronic device, namely, a user interface displayed by the electronic device when the user starts to perform a downward operation from the top of the electronic device.

The application framework layer provides an application programming interface (application programming interface, API) and a programming framework for an application at the application layer. The application framework layer includes some predefined functions.

As shown in FIG. 14, the application framework layer may include a window manager, a content provider, a view system, a phone manager, a resource manager, a notification manager, and the like.

The window manager (window manager) is configured to manage a window program, for example, manage a window status, an attribute, view (view) addition, deletion, update, a window sequence, and message collection and processing. The window manager may obtain a size of the display, determine whether there is a status bar, perform screen locking, take a screenshot, and the like. In addition, the window manager is an entry for external access to the window.

The content provider is configured to store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a messages notification icon may include a text display view and an image display view.

The phone manager is configured to provide a communication function of the electronic device 100, for example, management of a call status (including answering, declining, or the like).

The resource manager (resource manager) provides various resources for an application, such as a localized string, an icon, a picture, a layout file (layout xml) of a user interface, a video file, a font, a color, an identity number (identity document, ID) of a user interface component (user interface module, UI component) (also referred to as a serial number or an account number), and the like. In addition, the resource manager is configured to manage the resources in a unified manner.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime schedules and manages the Android system.

The kernel library includes two parts: a performance function that needs to be invoked in java language, and a kernel library of the Android system.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (media libraries), a three-dimensional graphics processing library (for example, OpenGL ES), a 2D graphics engine (for example, SGL), and an image processing library.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of working procedures of software and hardware of the electronic device 100 with reference to a scenario in which a sound is played by using a smart speaker.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single touch operation, and a control corresponding to the single touch operation is a control of a smart speaker icon. The smart speaker application calls the interface of the application framework layer to start the smart speaker application, and then starts the audio driver by calling the kernel layer. An audio electrical signal is converted into an audio signal by the speaker 170A.

It may be understood that the structure illustrated in this application does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by using hardware, software, or a combination of software and hardware.

For example, this application provides an electronic device, including a memory and a processor. The memory is configured to store program instructions. The processor is configured to invoke the program instructions in the memory, so that the electronic device is enabled to perform the method according to the foregoing embodiments.

For example, this application provides a chip system. The chip system is applied to an electronic device including a memory, a display, and a sensor. The chip system includes a processor. When the processor executes computer instructions stored in the memory, the electronic device is enabled to perform the method according to the foregoing embodiments.

For example, this application provides a computer-readable storage medium. The computer-readable storage medium stores a computer program. When the computer program is executed by a processor, an electronic device is enabled to perform the method according to the foregoing embodiments.

For example, this application provides a computer program product, including executable instructions. The executable instructions are stored in a readable storage medium. At least one processor of an electronic device may read the executable instructions from the readable storage medium, and the at least one processor executes the executable instructions, to enable the electronic device to perform the method according to the foregoing embodiments.

In the foregoing embodiments, all or some of the functions may be implemented by using software, hardware, or a combination of software and hardware. When software is used to implement the embodiments, the embodiments may be implemented entirely or partially in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments are performed. The foregoing storage medium includes any medium that can store program code, such as a ROM, a random access memory RAM, a magnetic disk, or an optical disc.

**Claims**

**1.** An application recommendation method, applied to an electronic device, wherein the method comprises:

displaying, on a first interface, description information and an application recommendation list that are of a first application, wherein the description information of the first application comprises an image and a text that are related to the first application, and the application recommendation list of the first application comprises a second application related to the first application;

receiving a first operation for the second application in the application recommendation list of the first application; and

displaying a first image on the first interface in response to the first operation, wherein the first image is an image that is related to the second application and that is in description information of the second application, the description information of the second application comprises an image and a text that are related to the second application, and the first image is determined based on the description information of the second application and the description information of the first application.

2. The method according to claim 1, wherein that the first image is determined based on the description information of the second application and the description information of the first application comprises:
the first image is an image that is related to the second application and that has a greatest difference from the image related to the first application.

3. The method according to claim 1 or 2, wherein the method comprises:
further displaying a first text on the first interface in response to the first operation, wherein the first text indicates a feature of the second application.

4. The method according to claim 3, wherein the first text is placed in the first image.

5. The method according to claim 4, wherein an overlay location, a font color, and a font size of the first text are determined based on the first image.

6. The method according to any one of claims 3 to 5, wherein the first text comprises at least one of the following texts:
a text provided by a developer of the second application, a text related to the second application, or a text in the image related to the second application.

7. The method according to any one of claims 1 to 6, wherein the method further comprises:

displaying, on a second interface, description information and an application recommendation list that are of a third application, wherein the description information of the third application comprises an image and a text that are related to the third application, and the application recommendation list of the third application comprises the second application;

receiving a second operation for the second application in the application recommendation list of the third application; and

displaying a second image on the second interface in response to the second operation, wherein the second image is an image that is related to the second application and that is in the description information of the second application, the second image is determined based on the description information of the second application and the description information of the third application, and the second image is different from the first image.

8. The method according to claim 7, wherein the third application and the first application are of different types.

9. The method according to any one of claims 1 to 8, wherein the method further comprises:

further displaying a trigger control on the first interface in response to the first operation, wherein the trigger control is configured to trigger installation or update of the second application;

receiving a third operation for the trigger control; and

installing or updating the second application in the electronic device in response to the third operation.

10. The method according to claim 9, wherein the trigger control is placed in the first image.

11. The method according to any one of claims 1 to 10, wherein the displaying a first image on the first interface in response to the first operation comprises:

sending a first request to a server in response to the first operation;

receiving a first response from the server, wherein the first response carries the first image; and
displaying the first image in a partial area on the first interface.

12. The method according to any one of claims 1 to 11, wherein the method further comprises:

receiving a fourth operation in the first image; and
displaying, on a third interface in response to the fourth operation, the description information and an application recommendation list that are of the second application.

13. The method according to any one of claims 1 to 12, wherein the method further comprises:

receiving a fifth operation for the second application in the application recommendation list of the first application, wherein the fifth operation is different from the first operation; and
displaying, on a fifth interface in response to the fifth operation, the description information and the application recommendation list that are of the second application.

14. The method according to any one of claims 1 to 13, wherein the first interface is a user interface of an application market, and the first application or the second application is an application provided in the application market.

15. An electronic device, comprising a memory and a processor, wherein

the memory is configured to store program instructions; and
the processor is configured to invoke the program instructions in the memory, to enable the electronic device to perform the application recommendation method according to any one of claims 1 to 14.

16. A computer-readable storage medium, comprising computer instructions, wherein when the computer instructions are run on an electronic device, the electronic device is enabled to perform the application recommendation method according to any one of claims 1 to 14.

| | | |
|---|---|---|
| Application name: | XX health and sports | |
| Application name read in a PC application: | XX health and sports | |
| One-sentence description of the application: | Health and sports, champion guidance | ~ T31 |
| Detailed description of the application | XX health and sports provides champion courses of running, fitness, step counting, and yoga for users to choose freely, provides professional and comprehensive guidance and records, such as accurate running records, shares fitness achievements and experience, and provides sleep-aid music to help users stay calm... | ~ T30 |
| Update description of the application: | | |
| Three labels of the application | Sports; health (label provided by a developer); sports and fitness | |
| Icon of the application | | |
| Introduction video of the application | | |
| Screenshots of the application | F21   F22   F23      Upload | |

FIG. 1

11

HD 4G ,ıll 5G ,ıll 📶                    ▬   08:08

101

Icon of application 1 | Name of application 1

102

**Introduction**        Comments   Recommendation

Title text T11                            Title text T13

Image F11 of application 1 | Image F12 of application 1 | Image F13 of application 1

▶

103

Description text of application 1

104

Related recommendation

Icon of applicati... 2      1041

Name of application 2

Install        1042

FIG. 2A

11

HD 4G 5G

08:08

101

Icon of
application 1    Name of application 1

102

**Introduction**    Comments  Recommendation

Title text T11                    Title text T13

12

Image
applica                           Image F13 of
                                  application 1

Differentiated image
DF of application 2

                                  ▶

201                      lication 1

**Differentiated text
DT of application 2**

Relate

202   Install

Ico
applica

Name of
application 2

Install   1042

FIG. 2B

11

101

Icon of application 1    Name of application 1

102

**Introduction**    Comments    Recommendation

Title text T11    Title text T13

12

Image
applica    Image F13 of application 1

Differentiated image DF of application 2

201

**Differentiated text DT of application 2**    lication 1

Relate

Ico
applicati    202    Install

Name of application 2

Install    1042

FIG. 2C

11

101

Icon of application 1    Name of application 1

102

**Introduction**    Comments    Recommendation

Title text T11                      Title text T13

12

Image                               Image F13 of
applica                             application 1

Differentiated image
DF of application 2

lication 1

Related

202    Install

Ico
applicat

Name of
application 2

Install    1042

FIG. 2D

11

| Icon of application 1 | Name of application 1 |

101

102

**Introduction**    Comments  Recommendation

Title text T11

12

Image
applica

Differentiated image
DF of application 2

Title text T13

Image F13 of
application 1

▶

lication 1

Related

Icon
applica

202

Install

Name of
application 2

Install

1042

FIG. 2E

Communication system 10

Electronic
device 110

Server 210

FIG. 3A

Communication system 10

FIG. 3B

Feature extraction module 212

| 2121 | 2122 | 2123 | 2124 | 2125 | 2126 | 2127 | 2128 |
|---|---|---|---|---|---|---|---|
| Classification sub-network module | Keyword label sub-network module A | Keyword label sub-network module B | Text sub-network module | Multimodal text fusion module | Pre-training semantic sub-network module | Image sub-network module | Multimodal feature fusion module |

S111: Perform classification prediction on text information of an application 1, to obtain a classification feature of the application 1

S112: Transmit the classification feature of the application 1

S121: Perform keyword label prediction on the text information of the application 1, to obtain a keyword label feature 1 of the application 1

S122: Transmit the keyword label feature 1 of the application 1

TO FIG. 4B          TO FIG. 4B          TO FIG. 4B          TO FIG. 4B          TO FIG. 4B          TO FIG. 4B          TO FIG. 4B          TO FIG. 4B

FIG. 4A

EP 4 471 623 A1

CONT. FROM FIG. 4A

CONT.
FROM
FIG. 4A

CONT.
FROM
FIG. 4A

CONT.
FROM
FIG. 4A

CONT.
FROM
FIG. 4A

CONT.
FROM
FIG. 4A

CONT.
FROM
FIG. 4A

CONT.
FROM
FIG. 4A

CONT.
FROM
FIG. 4A

S131: Perform keyword
label prediction on
description information that
is obtained from an Internet
corpus and that is related to
the application 1, to obtain a
keyword label feature 2 of
the application 1

S132: Transmit the
keyword label feature
2 of the application 1

S141: Perform text
recognition on image
information of the
application 1, to obtain a
keyword label feature 3
of the application 1

S142:
Transmit the
keyword
label feature
3 of the
application 1

TO
FIG. 4C

TO
FIG. 4C

TO
FIG. 4C

TO
FIG. 4C

TO
FIG. 4C

TO
FIG. 4C

TO
FIG. 4C

TO
FIG. 4C

FIG. 4B

S151: Unify the classification feature of the application 1, the keyword label feature 1 of the application 1, the keyword label feature 2 of the application 1, and the keyword label feature 3 of the application 1 into a text feature vector of the application 1

S152: Transmit the text feature vector of the application 1

S16: Transmit the text feature vector of the application 1

S171: Perform feature extraction on the image information of the application 1, to obtain an image feature vector of the application 1

FIG. 4C

EP 4 471 623 A1

CONT.
FROM
FIG. 4C

CONT.
FROM
FIG. 4C

CONT.
FROM
FIG. 4C

CONT.
FROM
FIG. 4C

CONT.
FROM
FIG. 4C

CONT.
FROM
FIG. 4C

CONT.
FROM
FIG. 4C

CONT.
FROM
FIG. 4C

S172:
Transmit the
image feature
vector of the
application 1

S18: Input the text
feature vector of the
application 1 and the
image feature vector of
the application 1 to a
multimodal network
model for training, and
obtain a multimodal
fusion feature vector of
the application 1
through inference

S191:
Transmit the
text feature
vector of the
application 1

S192:
Transmit the
multimodal
fusion feature
vector of the
application 1

FIG. 4D

EP 4 471 623 A1

Perform unsupervised clustering on all text feature vectors, and perform optimization based on a cross entropy loss ⌐ S21

Determine, based on log information of user behavior data and under a same request for viewing a details page of an application, an application that is frequently downloaded as a positive sample, determine a part of or all applications that are not downloaded as negative samples, and use the positive sample and the negative sample as a pair of samples ⌐ S22

Input two feature vectors of each pair of samples to hidden layers of one or more network models with a same initialization weight simultaneously, and perform optimization based on a cosine loss, to obtain all optimized text feature vectors ⌐ S23

FIG. 5

F11    F12    F13

F21    F22    F23

Multimodal fusion feature vector [A1, A2, A3]
of application 1

Multimodal fusion feature vector [B1, B2, B3]
of application 2

Differentiated
image Diff $(A_i, B_j)$
of application 2

F21

FIG. 6

F21

Health and sports

T31 — Health and sports, champion guidance

FIG. 7A

F21

Health and sports

T32 — Champion courses, professional coaching, sleep-aid music

FIG. 7B

F21

Health and sports

T33 — Various sports, courses and guidance

FIG. 7C

```
         ┌─ 110                                              ┌─ 210
    ┌───────────────────┐                          ┌───────────────────┐
    │  Electronic device │                          │      Server        │
    └───────────────────┘                          └───────────────────┘
            │                                                │
  ┌──────────────────────────────┐                          │
  │ S31: After receiving an       │      Send a request 1    │
  │ operation 1 for               │─────────────────────────▶│
  │ viewing a details page of an  │                          │
  │ application 1,                │                          │
  └──────────────────────────────┘                          │
            │                           ┌───────────────────────────────────┐
            │                           │ S32: Determine an application      │
            │                           │ recommendation list of the         │
            │                           │ application 1                      │
            │                           └───────────────────────────────────┘
            │        S33: Send the application recommendation list of the    │
            │◀──────────────────────── application 1 ────────────────────────│
  ┌──────────────────────────────┐                          │
  │ S34: Display the application  │                          │
  │ recommendation list of the    │                          │
  │ application 1                 │                          │
  │ on the details page of the    │                          │
  │ application 1,                │                          │
  │ where the application          │                          │
  │ recommendation                │                          │
  │ list of the application 1      │                          │
  │ includes an                   │                          │
  │ application 2                 │                          │
  └──────────────────────────────┘                          │
  ┌──────────────────────────────┐                          │
  │ S35: After receiving an       │                          │
  │ operation 21 for              │      Send a request 2    │
  │ viewing differentiated        │─────────────────────────▶│
  │ information of the            │                          │
  │ application 2 in the          │                          │
  │ application                   │                          │
  │ recommendation list of the    │                          │
  │ application 1,                │                          │
  └──────────────────────────────┘                          │
            │                           ┌───────────────────────────────────┐
            │                           │ S36: Determine the differentiated  │
            │                           │ information between the application 2│
            │                           │ and the application 1              │
            │                           └───────────────────────────────────┘
            │    S37: Send the differentiated information between the         │
            │◀──── application 2 and the application 1 ───────────────────────│
  ┌──────────────────────────────┐                          │
  │ S38: Display the differentiated│                          │
  │ information between the         │                          │
  │ application 2 and              │                          │
  │ the application 1 on the        │                          │
  │ details page of the            │                          │
  │ application 1                 │                          │
  └──────────────────────────────┘                          │
            │                                                │
```

FIG. 8

91

08:08

Monday, 8 April
April 4th, Year of Gengzi

☀ 33°C

Update

Smart life    Music    Phone manager    XX video

901

Application market    XX travel    Gallery

FIG. 9A

92

9021

Search

Game center | Essential applications

Recommended applications | Quick applications

XX game — Install

XX travel — Install

XX notebook — Install

XX video editing — Install

Recommendation  Category  Ranking  Management  Me

FIG. 9B

51

92

9021

HUAWEI Health                          Cancel

Game center            Essential applications

Recommended            Quick applications
applications

XX game                    Install

XX travel                   Install

9022

q   w   e   r   t   y   u   i   o   p

a   s   d   f   g   h   j   k   l

⇧   z   x   c   v   b   n   m   ⌫

123  ☺        space              search

🌐                              🎤

9023

FIG. 9C

93

9021

HUAWEI Health                    Cancel

903

HUAWEI Health
Manage your health and fitness
all day long                              Install
★ ★ ★ ★ ★  17.8 billion

Smart fat
reduction plan

Scientific diet
management

Health
12.0

XX health and sports
Health and sports, champion
guidance                              Install
★ ★ ★ ★ ★  2960000

Health and sports

Master courses

Rich sleep-aid
music

FIG. 9D

94

HD 4G.ill 5G.ill 📶 ⬛ 08:08

← 🔍

**904**

HUAWEI Health
In-app purchases

Ad check·Manual check

**905**

4.7 ★★★★★ 17.8 billion 3+
11000 ratings installations At least 3 years old

**906**

**Introduction** 5919 comments Recommendation

Smart fat reduction plan Scientific diet management

Health 12.0

"Manage your health and fitness all day long"

**907**

About this application >

In-app purchases Version 12.1.1.320

The Huawei Health application provides professional sports recording and training courses such as fat reduction and body shaping, and integrates scientific sleep and health services, to help users run faster and farther and become healthier...

Developer

Huawei Software Technologies Co., Ltd.

**908**

Related recommendation More >

9081

XX health and sports | Daily yoga | XX1 health | XX2 health | XX3 health

XX1 health | XX2 health | XX3 health

9082 (Install) (Install) (Install) (Install) (Install)

**909**

Start …

FIG. 9E

94

HD 4G᎑ᆞ 5G᎑ᆞ 🔋 08:08

←  🔍

HUAWEI Health
In-app purchases

Ad check·Manual check

4.7 ★★★★★  17.8 billion  3+
11000 ratings  installations  At least 3 years old

**Introduction**  5919 comments  Recommendation

Smart fat reduction plan  Scientific diet management

95

F21

Health and sports

"..........d fitness all day long"

Abo.  >
In-a|  Health and sports, |n 12.1.1.320
The |  champion guidance  |ides professional sports
recor|_____|as fat reduction and body
shapi.........ep and health services, to help
users.........me healthier...
Dev.
Hua.........gies Co., Ltd.

9102

Rela.  Install  More >

XX2  XX3
health  health

XX health  Daily yoga  XX1 health  XX2 health  XX3 health
and sports

(Install) (Install) (Install) (Install) (Install)

(        Start        )  💬

FIG. 9F

94

FIG. 9G

94

FIG. 9H

94

HD 4G.ull 5G.ull 🔋 08:08

←  🔍

HUAWEI Health
In-app purchases

Ad check·Manual check

4.7 ★★★★★  17.8 billion  3+
11000 ratings  installations  At least 3 years old

**Introduction**  5919 comments Recommendation

Smart fat reduction plan  Scientific diet management

95

F21

Health and sports

"l fitness all day long"

Abc  >

In-a  n 12.1.1.320

The  ides professional sports
recor  as fat reduction and body
shapi  ep and health services, to help
users  me healthier...

Dev

Hua  gies Co., Ltd.

Rel  9102  More >

Install

XX2 health  XX3 health

XX health and sports  Daily yoga  XX1 health  XX2 health  XX3 health

Install  Install  Install  Install  Install

Start  💬...

FIG. 9I

94

HD 4G.ill 5G.ill 📶          🔋  08:08

←                              🔍

HUAWEI Health
In-app purchases

Ad check·Manual check

4.7 ★★★★★   17.8 billion   3+
                              At least 3
11000 ratings   installations  years old

**Introduction**  5919 comments  Recommendation

Smart fat reduction plan」   Scientific diet management」

95

F21

Health and sports

"Ma                    tness all day long"

Abc                              >

In-a              on 12.1.1.320
The                  ides professional sports
rec or               as fat reduction and body
shapi                ep and health services, to help
users                ome healthier...

Dev

Hua                  gies Co., Ltd.

Rel                              More >

|            |            |            | XX2 health | XX3 health |
| XX health and sports | Daily yoga | XX1 health | XX2 health | XX3 health |
| Install | Install | Install | Install | Install |

Start   💬

FIG. 9J

96

FIG. 9K

Display, on a first interface, description information and an application recommendation list that are of a first application, where the description information of the first application includes an image and a text that are related to the first application, and the application recommendation list of the first application includes a second application related to the first application ⟶ S101

Receive a first operation for the second application in the application recommendation list of the first application ⟶ S102

Display a first image on the first interface in response to the first operation, where the first image is an image that is related to the second application and that is in description information of the second application, the description information of the second application includes an image and a text that are related to the second application, and the first image is determined based on the description information of the second application and the description information of the first application ⟶ S103

FIG. 10

Display, on a second interface, description information and an application recommendation list that are of a third application, where the description information of the third application includes an image and a text that are related to the third application, and the application recommendation list of the third application includes a second application ⟶ S201

Receive a second operation for the second application in the application recommendation list of the third application ⟶ S202

Display a second image on the second interface in response to the second operation, where the second image is an image that is related to the second application and that is in description information of the second application, the second image is determined based on the description information of the second application and the description information of the third application, and the second image is different from a first image ⟶ S203

FIG. 11

Send a first request to a server in response to a first operation ⌐ S301

Receive a first response from the server, where the first response carries a first image ⌐ S302

Display the first image in a partial area on a first interface ⌐ S303

FIG. 12

Electronic device 100

FIG. 13

| Application layer | Camera | Calendar | Map | WLAN | Music | Messages |
|---|---|---|---|---|---|---|
| | Gallery | Phone | Navigation | Bluetooth | Videos | ... |

| Application framework layer | Window manager | Content provider | Phone manager | Resource manager |
|---|---|---|---|---|
| | Notification manager | View system | ... | |

| System library | Surface manager | Three-dimensional graphics processing library | Android runtime |
|---|---|---|---|
| | Two-dimensional graphics engine | Media library | Image processing library | ... |

| Kernel layer | Display driver | Camera driver |
|---|---|---|
| | Audio driver | Sensor driver | ... |

FIG. 14

## INTERNATIONAL SEARCH REPORT

| International application No. |
| --- |
| **PCT/CN2023/082201** |

| A. | CLASSIFICATION OF SUBJECT MATTER |
| --- | --- |

G06F 16/9535(2019.01)i

According to International Patent Classification (IPC) or to both national classification and IPC

| B. | FIELDS SEARCHED |
| --- | --- |

Minimum documentation searched (classification system followed by classification symbols)

IPC：G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 应用, 程序, app, 推荐, 关联, 相关, 特征, 差别, 差异, 区别, 不同, 相似, 特点, application, program, recommend+, association, correlation, characteristic, difference, distinction, similarity

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 103763361 A (BEIJING QIHOO TECHNOLOGY CO., LTD. et al.) 30 April 2014 (2014-04-30)<br>description, paragraphs 128-161 | 1-16 |
| A | CN 104468813 A (GUANGZHOU AIJIUYOU INFORMATION TECHNOLOGY CO., LTD.) 25 March 2015 (2015-03-25)<br>entire document | 1-16 |
| A | CN 109407930 A (VIVO COMMUNICATION TECHNOLOGY CO., LTD.) 01 March 2019 (2019-03-01)<br>entire document | 1-16 |
| A | CN 114186083 A (BEIJING DAJIA INTERCONNECTION INFORMATION TECHNOLOGY CO., LTD.) 15 March 2022 (2022-03-15)<br>entire document | 1-16 |
| A | US 2017277699 A1 (ROVI GUIDES, INC.) 28 September 2017 (2017-09-28)<br>entire document | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 May 2023** | **22 May 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
| --- |
| **PCT/CN2023/082201** |

| Patent document cited in search report | | | Publication date (day/month/year) | Patent family member(s) | | | Publication date (day/month/year) |
| --- | --- | --- | --- | --- | --- | --- | --- |
| CN | 103763361 | A | 30 April 2014 | None | | | |
| CN | 104468813 | A | 25 March 2015 | None | | | |
| CN | 109407930 | A | 01 March 2019 | None | | | |
| CN | 114186083 | A | 15 March 2022 | None | | | |
| US | 2017277699 | A1 | 28 September 2017 | WO | 2017165274 | A1 | 28 September 2017 |
| | | | | GB | 201704459 | D0 | 03 May 2017 |
| | | | | US | 2020311129 | A1 | 01 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210307768